(19)

Europäisches
Patentamt
European
Patent Office
Office européen
des brevets

(11) **EP 2 868 365 A1**

(12) **EUROPEAN PATENT APPLICATION**
published in accordance with Art. 153(4) EPC

(43) Date of publication:
**06.05.2015 Bulletin 2015/19**

(21) Application number: **13809580.7**

(22) Date of filing: **28.06.2013**

(51) Int Cl.:
***B01D 63/00*** (2006.01)   ***B01D 69/10*** (2006.01)
***B01D 69/12*** (2006.01)

(86) International application number:
**PCT/JP2013/067828**

(87) International publication number:
**WO 2014/003171 (03.01.2014 Gazette 2014/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.06.2012   JP 2012145157**

(71) Applicant: **Toray Industries, Inc.
Tokyo 103-8666 (JP)**

(72) Inventors:
• **HIROZAWA Hiroho**
**Otsu-shi**
**Shiga 520-8558 (JP)**
• **KOIWA Masakazu**
**Otsu-shi**
**Shiga 520-8558 (JP)**
• **YAMADA Hiroyuki**
**Otsu-shi**
**Shiga 520-8558 (JP)**

• **TAKAGI Kentaro**
**Otsu-shi**
**Shiga 520-8558 (JP)**
• **OKAMOTO Yoshiki**
**Otsu-shi**
**Shiga 520-8558 (JP)**
• **HAMADA Tsuyoshi**
**Otsu-shi**
**Shiga 520-8558 (JP)**
• **OTO Katsufumi**
**Otsu-shi**
**Shiga 520-8558 (JP)**
• **KIMURA Masahiro**
**Otsu-shi**
**Shiga 520-8558 (JP)**

(74) Representative: **Hoefer & Partner
Pilgersheimer Straße 20
81543 München (DE)**

(54) **SEPARATION MEMBRANE AND SEPARATION MEMBRANE ELEMENT**

(57)   A separation membrane including: a separation membrane main body having a feed-side face and a permeate-side face; and a plurality of channel members adhered to the permeate-side face of the separation membrane main body, in which a weight W (g) of the plurality of channel members and a volume V ($cm^3$) of the plurality of channel members, exclusive of portions impregnated into the permeate-side face, satisfy the following relational expression: $1.0 \leq W/V \leq 2.5$, and the channel members have a melting temperature of 200°C or lower as measured with a differential scanning calorimeter.

*Fig. 3*

**EP 2 868 365 A1**

**Description**

TECHNICAL FIELD

The present invention relates to a separation membrane element for use in separation of ingredients contained in fluid such as liquid or gas.

BACKGROUND ART

In the recent technology for removal of ionic substances contained in seawater, brackish water or the like, separation methods utilizing separation membrane elements have found increasing uses as processes for energy savings and conservation of resources. Separation membranes adopted in the separation methods utilizing separation membrane elements are classified into five groups according to their pore sizes and separation performance, namely micro filtration membranes, ultrafiltration membranes, nanofiltration membranes, reverse osmosis membranes and forward osmosis membranes. These membranes have been used in e.g. production of drinkable water from seawater, brackish water or water containing deleterious substances, production of ultrapure water for industrial uses, effluent treatment, recovery of valuable substances, or the like, and membranes to be used therein have been changed to suit ingredients targeted for separation and separation performance requirements.

Separation membrane elements can have a wide variety of shapes, but they have commonality in the sense that a raw fluid is fed to one surface of a separation membrane and a permeated fluid is obtained from the other surface of the separation membrane. By having a plurality of separation membranes tied in a bundle, each separation membrane element is configured to extend the membrane area per separation membrane element, or equivalently, to increase the amount of a permeated fluid obtained per separation membrane element. Various types of shapes, such as those of a spiral type, a hollow fiber type, a plate-and-frame type, a rotating flat-membrane type and flat-membrane integration type, have been proposed for separation membrane elements in keeping with their intended uses and purposes.

For example, spiral-type separation membrane elements have been widely used in reverse osmosis filtration. Each spiral-type separation membrane element is provided with a central tube and a laminate wound up around the central tube. The laminate is formed by laminating a feed-side channel member for feeding a raw fluid to the surface of a separation membrane, a separation membrane for separating ingredients contained in the raw fluid and a permeate-side channel member for leading, into the central tube, a permeate-side fluid having been separated from the feed-side fluid by passing through the separation membrane. In the spiral-type separation membrane element, it is possible to apply pressure to a raw fluid, whereby it becomes possible to take out a permeated fluid in greater quantity. In this respect, the use of spiral-type one is advantageous.

In the spiral-type separation membrane element, a net made mainly from a polymer has been generally used as the feed-side channel member in order to form a flow path for a feed-side fluid. In addition, a multilayer-type separation membrane has been used as the separation membrane. The multilayer-type separation membrane is a separation membrane including a separation functional layer formed from a cross-linked polymer such as polyamide, a porous resin layer formed from a polymer such as polysulfone, and a nonwoven fabric made from a polymer such as polyethylene terephthalate, in which these layers are stacked in the order mentioned, from the feed side toward the permeate side. And as a permeate-side channel member, a knitting member referred to as tricot finer in mesh than the feed-side channel member has been used for the purposes of preventing the separation membrane from sinking and of forming a permeate-side flow path.

As demands for reduction in cost of fresh water production have grown in recent years, membrane elements having higher performance have been required. For example, with the intention of improving separation performance of separation membrane elements and increasing the amount of permeated fluid per unit time, improvements in performance of separation membrane element members, such as channel members, have been suggested.

Specifically, Patent Document 1 has proposed the element having as a permeate-side channel member a sheet material embossed with an uneven pattern. And Patent Document 2 has proposed the element avoiding the necessity of having a feed-side channel member such as a net, and a permeate-side channel member such as tricot, by having a sheet-shaped separation membrane including a porous support having asperities on the surface thereof and a separation-active layer.

BACKGROUND ART DOCUMENT

PATENT DOCUMENT

Patent Document 1: JP-A-2006-247453
Patent Document 2: JP-A-2010-99590

## SUMMARY OF THE INVENTION

## PROBLEMS THAT THE INVENTION IS TO SOLVE

However, it cannot be said that the foregoing separation membrane elements are sufficient in performance improvements, especially in point of performance stability during long-term operation.

An object of the present invention is therefore to provide a separation membrane and a separation membrane element which allow stabilization of separation-and-removal performance during operation of the separation membrane element, especially under highly pressurized conditions.

## MEANS FOR SOLVING THE PROBLEMS

In order to achieve the object mentioned above, the present invention has the following constitutions (1) to (7).

(1) A separation membrane including: a separation membrane main body having a feed-side face and a permeate-side face; and a plurality of channel members adhered to the permeate-side face of the separation membrane main body,
in which a weight W (g) of the plurality of channel members and a volume V (cm$^3$) of the plurality of channel members, exclusive of portions impregnated into the permeate-side face, satisfy the following relational expression:

$$1.0 \leq W/V \leq 2.5,$$

and the channel members have a melting temperature of 200°C or lower as measured with a differential scanning calorimeter.
(2) The separation membrane according to (1), in which a ratio of a thickness of the channel member to a width of the channel member in a first direction parallel to the permeate-side face is from 0.2 to 1.
(3) The separation membrane according to (1) or (2), in which the channel members are separately provided from one another so that the width of each channel member becomes wider than a spacing between the channel members adjacent to each other in the first direction parallel to the permeate-side face.
(4) The separation membrane according to (2) or (3), in which a ratio of the spacing between the adjacent channel members to the width of each channel member in the first direction is from 0.3 to 1.3.
(5) The separation membrane according to any one of (1) to (4), in which a maximum value of differences in thicknesses of all the channel members provided on the separation membrane is 0.25 mm or smaller.
(6) The separation membrane according to any one of (1) to (5), in which the separation membrane main body includes a substrate, a porous supporting layer provided on the substrate and a separation functional layer provided on the porous supporting layer, and the substrate is a long-fiber nonwoven fabric.
(7) A separation membrane element including the separation membrane according to any one of (1) to (6).

## ADVANTAGE OF THE INVENTION

By adjusting the density of permeate-side channel members to fall within the range defined above, it becomes possible to form permeate-side channel members having high efficiency and stability. In addition, since deformation of the channel members is small even under pressurized operation, it is possible to obtain a high-performance and high-efficiency separation membrane element having the capability of removal of separated ingredients and high permeation performance.

## BRIEF DESCRIPTION OF THE DRAWINGS

[Fig. 1] Fig. 1 is a plan view showing a separation membrane with channel members which are provided continuously in the length direction of a separation membrane.
[Fig. 2] Fig. 2 is a plan view showing a separation membrane with channel members provided discontinuously in the length direction of a separation membrane.
[Fig. 3] Fig. 3 is a cross-sectional view of a separation membrane.
[Fig. 4] Fig. 4 is a developed perspective view showing one configuration of a separation membrane element.
[Fig. 5] Fig. 5 is an exploded perspective view showing one configuration of an envelope-shaped membrane.

MODE FOR CARRYING OUT THE INVENTION

One exemplary embodiment of the present invention is illustrated below in detail.

[1. Separation Membrane]

(1-1) Outline

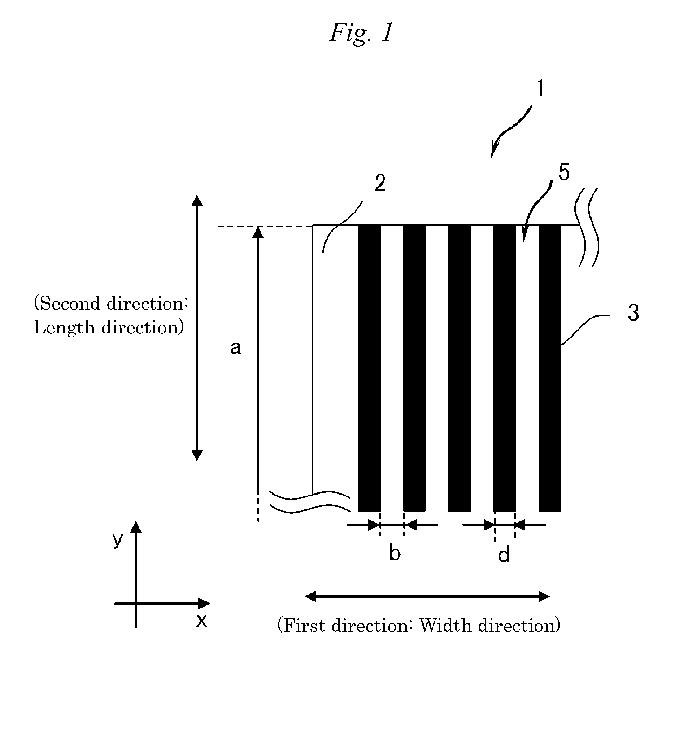

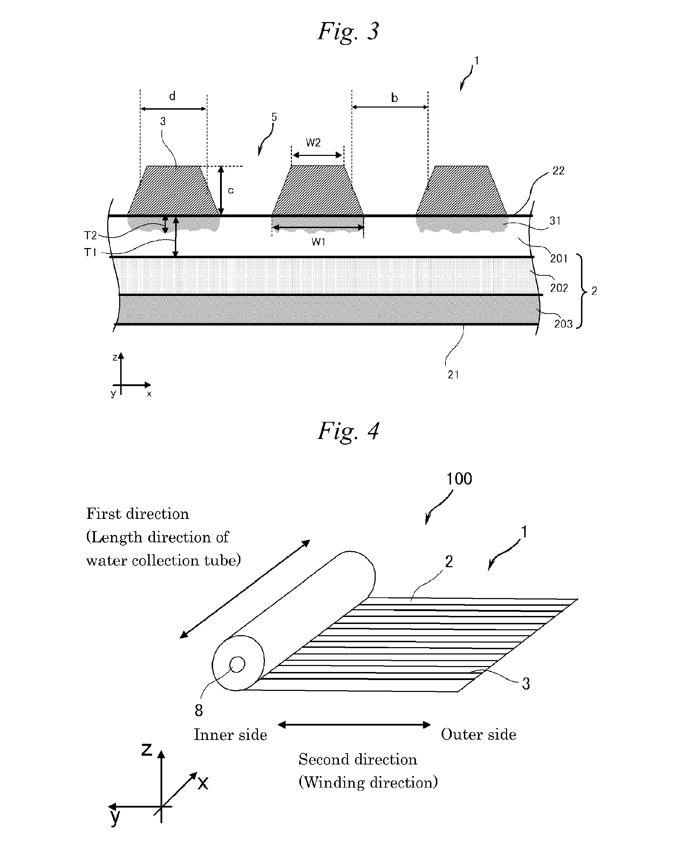

The term "separation membrane" refers to the membrane which makes it possible to separate ingredients contained in a fluid fed to a surface thereof from the fluid and to obtain a fluid having permeated through it. The separation membrane includes a separation membrane main body and a plurality of channel members disposed on the separation membrane main body.
As one example of such a separation membrane, the separation membrane 1 according to an embodiment of the present invention has, as shown in Figs. 1 to 3, a separation membrane main body 2 and permeate-side channel members (channel members) 3. The separation membrane main body 2 has a feed-side face 21 and a permeate-side face 22.
The term "feed-side face" of a separation membrane main body as used in this description refers to the surface which is one of the two faces of a separation membrane main body and is the side to which a raw fluid is to be fed. The term "permeate-side face" as used in this description refers to the face on the side opposite to the feed-side face. As described hereinafter, when the separation membrane main body includes a substrate 201 and a separation functional layer 203 as shown in Fig. 3, it is generally said that the face on the side of the separation functional layer 203 is the feed-side face 21 and the face on the side of the substrate 201 is the permeate-side face 22.
Each channel member 3 is provided on the permeate-side face 22 of a separation membrane main body 2 so as to form permeate-side flow path (flow path) 5. Details on individual components of a separation membrane 1 are described hereinafter.
Directional axes, namely x, y and z axes, are shown in each of Figures. There may be cases where the x axis and the y axis are referred to as the first direction and the second direction, respectively. As shown in Fig. 1, the separation membrane main body 2 is rectangular in shape, and the first direction and the second direction are parallel to the outer edges of the separation membrane main body 2. There are cases where the first direction is referred to as the width direction and the second direction is referred to as the length direction.

(1-2) Separation Membrane Main Body

<Outline>

As a separation membrane main body, a membrane having separation performance appropriate to the usage and intended purpose thereof and so on is used. The separation membrane main body may be formed into a single layer, or it may be formed into a composite layer including a separation functional layer and a substrate. As shown in Fig. 3, the composite membrane may further have a porous supporting layer 202 which is formed between the separation functional layer 203 and the substrate 201.

<Separation Functional Layer>

The thickness of the separation functional layer, though it has no numerical value limits in the concrete, is preferably in a range of 5nm to 3,000 nm in view of separation performance and permeation performance. In the cases of a reverse osmosis membrane, a forward osmosis membrane and a nanofiltration membrane in particular, it is preferable that each membrane has a thickness of 5 nm to 300 nm.
The thickness of the separation functional layer can be determined in conformance with any of traditional methods to measure separation membrane thickness. For example, a separation membrane is embedded in a resin, and cut into ultrathin slices. The slices obtained are subjected to some treatment, such as dyeing. Then, they are observed under a transmission electron microscope, whereby thickness measurements become possible. When the separation functional layer has a pleated structure, on the other hand, the thickness thereof can be determined by making height measurements on 20 pleats at intervals of 50 nm in the direction of cross-sectional length of the pleated structure located above the porous supporting layer and calculating the average of these heights measured.

The separation functional layer may be a layer having both a separation function and a support function, or it may be a layer having a separation function alone. Additionally, the term "separation functional layer" refers to the layer having at least a separation function.

When the separation functional layer has both a separation function and a support function, a layer containing cellulose, polyvinylidene fluoride, polyether sulfone or polysulfone as a main component is preferably applied to such a separation functional layer.

Additionally, the expression of "X containing Y as a main component" in this description means that the content of Y in X is 50% by weight or higher, preferably 70% by weight or higher, more preferably 80% by weight or higher, still more preferably 90% by weight or higher, and most preferably 95% by weight or higher. In the case where two or more components correspond to Y, the total content of those components falls within the foregoing ranges.

On the other hand, cross-linked polymers are suitably used for separation functional layers in view of easiness of pore size control and excellent durability. In view of excellent performance, especially in separating, from a raw fluid, ingredients in the raw fluid, a polyamide separation functional layer obtained by polycondensation reaction between a polyfunctional amine and a polyfunctional acid halide, an organic-inorganic hybrid function layer and the like can be suitably used. Each of these separation functional layers can be formed by carrying out polycondensation of monomers on a porous supporting layer.

For example, the separation functional layer can contain polyamide as a main component. Such a membrane can be formed by carrying out interfacial polycondensation reaction between a polyfunctional amine and a polyfunctional acid halide in accordance with any of publicly known methods. For instance, the polyamide separation functional layer can be obtained by applying an aqueous solution of polyfunctional amine to a porous supporting layer, removing the excess with an air knife or the like, and then applying thereto an organic solvent solution containing a polyfunctional acid halide.

On the other hand, the separation functional layer may have an organic-inorganic hybrid structure containing a Si element or the like. The separation functional layer having an organic-inorganic hybrid structure can contain e.g. the following compounds (A) and (B):

(A) a silicon compound containing a silicon atom to which a reactive group having an ethylenic unsaturated group and a hydrolysable group are directly bonded, and
(B) an ethylenic unsaturated group-containing compound other than the compound (A).

Specifically, the separation functional layer may contain a condensation product of the hydrolysable group in the compound (A) and polymerization products of the ethylenic unsaturated groups in the compound (A) and/or the compound (B). More specifically, the separation functional layer may contain at least one of the following polymerization products:

polymerization products formed through the condensation and/or the polymerization of the compound (A) alone;
polymerization products formed through the polymerization of the compound (B) alone; and
products formed through the copoloymerization of the compound (A) and the compound (B).

Additionally, condensates are included in the polymerization products. And the compound (A) may undergo condensation via its hydrolysable group in the interior of the compound (A)-compound (B) copolymer.

The hybrid structure can be formed by any of publicly known methods. One example of hybrid structure-forming methods is as follows. A reaction solution containing the compound (A) and the compound (B) is applied to a porous supporting layer. The excess of the reaction solution is removed, and then heat treatment may be carried out for the purpose of condensing hydrolysable groups. As the method for polymerizing ethylenic unsaturated groups in the compound (A) and the compound (B), heat treatment, electromagnetic-wave irradiation, electron-beam irradiation or plasma irradiation may be adopted. For the purpose of increasing the polymerization speed, a polymerization initiator, a polymerization accelerator and the like can be added at the occasion of forming the separation functional layer.

Additionally, regarding any of the separation functional layers, the membrane surface thereof, before being used, may be rendered hydrophilic e.g. by means of an aqueous solution containing alcohol, an alkaline aqueous solution or the like.

<Porous Supporting layer>

The porous supporting layer is a layer which supports the separation functional layer, and can translate into a porous resin layer.

The porous supporting layer has no particular restrictions on materials used therein and shape thereof. For example, the porous supporting layer may be formed on a substrate through the use of a porous resin. In forming the porous supporting layer, polysulfone, cellulose acetate, polyvinyl chloride, epoxy resin, or a mixture or a laminate of any two or more thereof can be used. Among them, however, polysulfone is preferably used in view of high chemical, mechanical and thermal stability and easiness of pore-size control.

The porous supporting layer imparts mechanical strength to the separation membrane, and unlike the separation membrane it has no separation function for molecular-size fine components, such as ions. There are no particular limitation to sizes and size distribution of pores of the porous supporting layer. For example, the porous supporting layer may have uniform fine pores, or it may have such a size distribution that pores gradually increase in size from the surface on the side where the separation functional layer is formed to the other face. In either case, the projected area diameter of fine pores present at the surface on the side where the separation functional layer is formed is preferably from 1 nm to 100 nm as determined through the use of an atomic force microscope or an electron microscope. In view of interfacial polymerization reactivity and retention of the separation functional layer in particular, it is preferable that the pores present at the surface of the porous supporting layer on the side where the separation functional layer is formed have projected area diameters ranging from 3 nm to 50 nm.

The thickness of the porous supporting layer has no particular limits, but on the ground that it should impart strength to the separation membrane, it is appropriate that the thickness of the porous supporting layer is within a range of 20 μm to 500 μm, preferably from 30 μm to 300 μm.

The configuration of the porous supporting layer can be observed under a scanning electron microscope, a transmission electron microscope or an atomic force microscope. For instance, when the observation is made with a scanning electron microscope, a sample for cross-section observations is made by peeling off the porous supporting layer from the substrate, and cutting the peeled-off layer in accordance with a freeze fracture method. This sample is coated with a thin film of platinum, platinum-palladium or ruthenium tetrachloride, preferably ruthenium tetrachloride, and observed with an ultrahigh-resolution field-emission scanning electron microscope (UHR-FE-SEM) under an acceleration voltage of 3 to 6 kV. As the ultrahigh-resolution field-emission scanning electron microscope, it is possible to use e.g. an electron microscope Model S-900 made by Hitachi Ltd. On the basis of electron micrographs obtained in such a manner, the thickness of the porous supporting layer and the projected area diameters of pores at the surface of the porous supporting layer can be determined.

The thickness and pore diameter of the porous supporting layer are represented as their respective average values. Specifically, the thickness of the porous supporting layer is an average value obtained by making thickness measurements at 20 points chosen at intervals of 20 μm in the direction orthogonal to the thickness direction in cross-section observation and averaging out the measurement values. And the pore diameter is an average value obtained by making projected area diameter measurements on 200 pores and averaging out the measurement values.

Then a method for forming the porous supporting layer is described. The porous supporting layer can be formed e.g. by casting a N,N-dimethylformamide (hereinafter abbreviated as DMF) solution of polysulfone as mentioned above in a uniform thickness onto a substrate as mentioned below, such as a tightly woven polyester fabric or a nonwoven fabric, and subjecting the cast solution to wet coagulation in water.

The porous supporting layer can be formed in accordance with the method described in "Office of Saline Water Research and Development Progress Report", No. 359 (1968). Therein, adjustments to the polymer concentration, the solvent temperature and the poor solvent can be made in order to obtain the desired configuration.

For instance, the porous supporting layer can be obtained by taking the following steps. A predetermined concentration of polysulfone resin solution is prepared by dissolving a predetermined amount of polysulfone in DMF, and an almost uniform coat of the thus prepared polysulfone resin solution is applied to a substrate of a polyester fabric or a nonwoven fabric, then left standing in the air for a certain length of time to remove the solvent on the surface, and further immersed in a coagulating solution to coagulate the polysulfone.

<Substrate>

The separation membrane main body may have a substrate from the standpoint of e.g. its strength and dimensional stability. As to the substrate, a fibrous substrate is preferably used in view of strength, ability to form asperities and fluid permeability.

Both a long-fiber nonwoven fabric and a short-fiber nonwoven fabric can be suitably used as the substrate. The long-fiber nonwoven fabric in particular has an excellent membrane-forming property, and therefore prevents the possibilities that, when a solution of high polymer is flow-cast onto the fabric, the solution may permeate to the backside of the fabric and the porous supporting layer may peel off because of overpermeation of the solution, and further can inhibit the membrane formed thereon from becoming nonuniform owing to fluffiness of the substrate and defects including pinholes and the like. In addition, the case of using as the substrate a long-fiber nonwoven fabric made up of thermoplastic continuous filaments can reduce unevenness caused by fluffiness of fibers and membrane defects produced at the time of flow-cast of a polymer solution as compared with the case of using a short-fiber nonwoven fabric. Further, when the separation membrane is formed continuously, it is appropriate to use a long-fiber nonwoven fabric superior in dimensional stability because tension is applied to the direction in which a membrane is being formed.

In terms of formability and strength, it is advantageous for fibers of a long-fiber nonwoven fabric to be longitudinally oriented more in the surface layer on the side opposite to the porous supporting layer side than in the surface layer on the porous supporting layer side. Having such a configuration is advantageous because it allows not only retention of strength, thereby achieving high effect on prevention of membrane failure and the like, but also improvement in ability to form into a laminate including a porous supporting layer and a substrate at the occasion of giving asperities to a separation membrane, thereby stabilizing an uneven surface profile of the separation membrane.

More specifically, in the long-fiber nonwoven fabric, the degree of fiber orientation in the surface layer on the side opposite to the porous supporting layer side is preferably from 0° to 25°. In addition, the difference in the degree of fiber orientation between the surface layer on the side opposite to the porous supporting layer side and that on the porous supporting layer side is preferably from 10° to 90°.

In a process of making a separation membrane and in a process of making a membrane element, heating steps are included. And there occurs a phenomenon in which a porous supporting layer or a separation functional layer shrinks when heated. This phenomenon is remarkable in the width direction in particular to which no tension is applied in continued membrane formation. The shrinkage causes a problem in dimensional stability or the like, and it is therefore preferred that the substrate is low in rate of dimensional change by heat. Cases where the difference in degree of fiber orientation in a nonwoven fabric between the surface layer on the side opposite to the porous supporting layer side and the surface layer on the porous supporting layer side is in a range of 10° to 90° are preferred because they can also inhibit thermal changes in the direction of the width.

The term "degree of fiber orientation" used in this description refers to the index indicating orientations of fibers in a nonwoven fabric substrate incorporated in the porous supporting layer. In the concrete, the degree of fiber orientation is an average value of angles between fibers constituting nonwoven fabric substrate and the direction of travel in continued membrane formation, namely the length direction of a nonwoven fabric substrate. More specifically, when the length directions of fibers are parallel to the direction of travel in membrane formation, the degree of fiber orientation is 0°. On the other hand, when the length directions of fibers are orthogonal to the direction of travel in membrane formation, or parallel to the width direction of a nonwoven fabric substrate, the degree of fiber orientation is 90°. Thus the degree of fiber orientation nearer to 0° indicates that the directions of fibers are the nearer to the longitudinal direction, and the degree of fiber orientation nearer to 90° indicates that the directions of fibers are the nearer to the lateral direction.

The degree of fiber orientation is determined in the following manner. To begin with, 10 small sample pieces are randomly taken from a piece of nonwoven fabric. Then, photographs of surfaces of these pieces are taken under a scanning electron microscope set at a magnification of 100 to 1,000 times. From the photographs taken, 10 fibers per sample piece are chosen and an angle which each fiber forms with the length direction of the nonwoven fabric is measured, with the length direction of nonwoven fabric (also referred to as the longitudinal direction, or the direction of travel in membrane formation) being taken as 0°. In other words, angle measurements are made on 100 fibers per piece of nonwoven fabric. The average value of the angles thus measured on the 100 fibers is calculated. The value obtained by rounding off the thus calculated average value to the first decimal place is defined as the degree of fiber orientation.

It is appropriate to adjust the substrate thickness so that the sum total of substrate thickness and porous supporting layer thickness falls within a range of 30 $\mu$m to 300 $\mu$m, preferably 50 $\mu$m to 250 $\mu$m.

(1-3) Permeate-side Channel Member

As shown in Figs. 1 to 3, a plurality of permeate-side channel members (channel members) 3 is provided on the permeate-side face 22 of a separation membrane main body so as to form the permeate-side flow path 5. The expression of "provided so as to form the permeate-side flow path" means that channel members are configured so that a permeated fluid having permeated through the separation membrane main body can arrive at a water collection tube when the separation membrane is incorporated into a separation membrane element described hereinafter. Details on the configuration of channel members are as follows.

<Density>

«Ratio of Weight of Channel Member to Volume of Channel Member, Exclusive of Portion Impregnated into Permeate-Side Face»

It is desired that the weight W (g) of a plurality of channel members adhered to the permeate-side face of a separation membrane main body and the volume V ($cm^3$) of the plurality of channel members, exclusive of portions impregnated into the permeate-side face, satisfy a relational expression $1.0 \leq W/V \leq 2.5$, preferably a relational expression $1.0 \leq W/V \leq 1.5$.

Having the ratio of the weight of the plurality of channel members to the volume of the plurality of channel members, exclusive of portions impregnated into the permeate-side face, in the range as specified above makes it possible to suppress changes in shape of the channel members while ensuring a good ability to produce fresh water even when pressure filtration continues long hours, whereby the flow path is maintained with stability.

The weight of channel members is calculated by subtracting the weight of the separation membrane main body from the weight of the whole separation membrane including the separation membrane main body and the channel members.

The volume of the channel members can be measured with a commercially available system, such as a high-precision configuration analysis system KS-1100 made by KEYENCE CORPORATION. When the channel members are shaped like a wall as mentioned below, the cross-sectional area of the wall-like thing is measured, the length is further measured, and from the product of these measurement values, the volume of the channel members may be calculated, or from three-dimensional measurement of the wall-like thing, the volume may be determined. On the other hand, when the channel members have a short shape, such as a dot shape, the volume can be determined by three-dimensional measurement. In other words, when the separation membrane main body is, as mentioned hereinafter, impregnated with ingredient of the channel member, a volume of portions of the channel members impregnated into the separation membrane main body is not included in the volume of the channel members.

<Melting Temperature>

The melting temperature of the channel members is preferably 200°C or lower, more preferably from 100°C to 170°C, as measured with a differential scanning calorimeter. Materials having their melting temperatures in such a range are high in ability to be machined. It is therefore easy to change the density of channel members so as to fall within the foregoing range by carrying out pressurized heat treatment as mentioned hereinafter. Additionally, when the channel members are formed with a mixture of two or more materials having melting temperatures different from each other, it is appropriate that the temperature of every material is 200°C or lower.

The measurement with a differential scanning calorimeter is carried out as follows. A sample in an amount of about 10.00 mg is loaded in a purpose-built aluminum pan, and the temperature thereof is (1) increased from 30°C to 250°C at a rate of 10°C/min, and kept at 280°C for 5 minutes, then (2) decreased from 250°C to 30°C at a rate of 10°C/min, and further kept at 30°C for 5 minutes, and further (3) increased at a rate of 10°C/min. From the peak top of the endothermic curve in the step (3), the melting temperature is determined. When more than one peak top is observed, it is essential only that the peak top situated on the highest temperature side is 200°C or lower. In the measurement, DSC6200 made by Seiko Instruments Inc., for example, can be used.

<Constituent of Channel Members>

Each channel member 3 is formed of a material different from that of the separation membrane main body 2. The expression of "a material different from" in the above sentence signifies a material differing in composition from the material used in the separation membrane main body 2. Herein, it is appropriate that the composition of the channel member 3 is different at least from that of the separation membrane main body's face on which the channel member 3 is formed, namely the composition of the permeate-side face of the separation membrane main body, preferably from the compositions of all layers forming the separation membrane main body 2.

Constituents of the channel members have no particular restrictions, but resins are preferably used for them. Specifically in view of chemical resistance, ethylenevinyl acetate copolymer resins and polyolefin resins such as polyethylene, polypropylene, and olefin copolymers, are suitable, and other polymers such as urethane resin and epoxy resin, can also be chosen. These resins can be used alone or as mixtures of any two or more thereof. Thermoplastic resins in particular make it possible to form channel members uniform in shape because they are easy to mold.

For example, by giving pressure treatment to channel members as mentioned hereinafter, it becomes possible to obtain the channel members increased in density while they have the same melting temperature as before the pressure treatment.

<Shape and Configuration of Channel Members>

«Outline»

Tricot which has so far been in wide use is a knitted cloth, and is made up of two-level crossing yarns. More specifically, tricot has a two-dimensionally continuous structure. When such a tricot is applied to the channel member, the height of the space becomes lower than the thickness of the tricot. In other words, all the thickness of the tricot cannot be utilized as the height of the space.

In contrast to such a tricot, the channel members 3 shown in each of Figs. 1 to 3 as examples of the configuration of the present invention are disposed so as not to overlap one another. Therefore the whole thickness (or height) of each channel member 3 according to each embodiment of the present invention can be fully utilized as the height of flow path as a channel. Thus the flow path height becomes higher in the case of applying the channel members 3 according to each embodiment of the present invention than in the case of applying the tricot having the same thickness as the channel member 3. In other words, since the cross-sectional area of the flow path becomes larger, and the flow resistance becomes lower.

In addition, a plurality of discontinuous channel members 3 are provided on one separation membrane main body 2 in each of Figures. The word "discontinuous" signifies that a plurality of channel members 3 are so configured to come apart when peeled away from the separation membrane main body 2. As opposite to such a configuration, a member such as net, tricot, film or the like retains a continuous single-piece shape even when peeled away from the separation membrane main body 2.

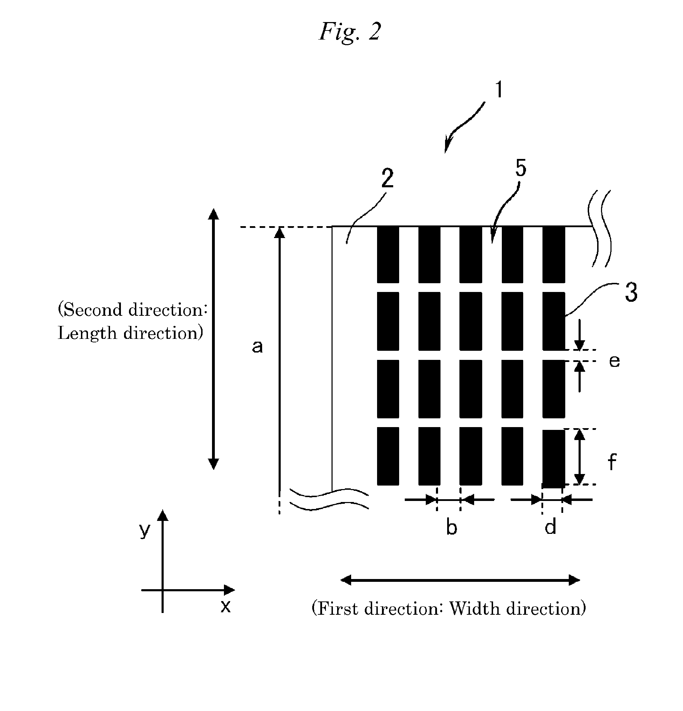

By being provided with a plurality of discontinuous channel members 3, the separation membrane 1 can suppress pressure drop when incorporated into a separation membrane element 100 mentioned hereinafter. As to examples of such a configuration, channel members 3 in Fig. 1 are discontinuously formed only in the first direction (the width direction), while those in Fig. 2 are discontinuously formed in both the first direction and the second direction (the length direction).

Additionally, it is appropriate that the separation membrane is disposed in a separation membrane element so that the second direction thereof agrees with the winding direction thereof. That is to say, as shown in Fig. 4, it is appropriate that the separation membrane is placed so as to make its first direction parallel to the length direction of a water collection tube 8 and its second direction orthogonal to the length direction of the water collection tube 8.

As to the example shown in Fig. 1, the channel members 3 are provided not only discontinuously in the first direction but also continuously in the second direction from one end to the other of the separation membrane main body 2. More specifically, when the separation membrane 1 is loaded in a separation membrane element 100 as shown in Fig. 4, each channel member 3 is continuously provided from the inner-side end to outer-side end of the separation membrane 1 in the winding direction (the second direction). In the separation membrane 1, the inner side in the winding direction is a side near the water collection tube 8, and the outer side in the winding direction is a side distant to the water collection tube 8.

When each channel member 3 is continuously provided in the second direction as shown in Fig. 1, sinking of the membrane during pressure filtration in particular can be inhibited. The term "sinking of the membrane" implies that the separation membrane 1 sinks in a flow path 5, whereby the flow path 5 is narrowed.

On the other hand, the channel members 3 in Fig. 2 are provided at intervals in both the first (width) and second (length) directions. More specifically, each channel member 3 in Fig. 2 is divided into a plurality of parts in the second direction also. By providing the channel members 3 discontinuously in both directions, an area of contact between fluid and channel members becomes small to result in reduction of pressure drop. In other words, such a configuration is a configuration that the space 5 has branch points. And more specifically, the configuration shown in Fig. 2 makes it possible that a permeated fluid is divided into branches by channel members 3 while flowing through the flow path 5, and further the branches are made to join into one in a downstream region.

Additionally, in the length direction in Fig. 2, channel members 3 are arranged in straight lines and spaces between adjacent channel members in the width direction are also arranged in straight lines. However, the invention should not be construed as being limited to these configurations.

The expression of "each channel member is provided from one end of the separation membrane main body to the other" does not mean that each channel member has to be provided on the edge of the separation membrane main body. It is essential only that each channel member is disposed all across the separation membrane in the second direction to an extent of allowing formation of flow path on the permeate side. And it is unnecessary for the separation membrane to be provided with channel members in the portion adhering to another separation membrane at the permeate-side face. In addition, it is also unnecessary for the separation membrane to be provided with channel members in the portion adhering to a water collection tube. For other reasons of specifications and production, areas in which no channel members are disposed may be provided in part of such sites as the neighborhood of the edge of the separation membrane.

In any of the configurations described above, when the channel members 3 are provided in a separation membrane element, it is appropriate that the channel members 3 are disposed so that the length direction of each individual channel member becomes nearly perpendicular to the length direction of the water collection tube 8. To be concrete, the term "nearly perpendicular" refers to the state in which the angle between the water collection tube 8 and each channel member 3 is in a range of 75° to 105°.

«Sizes of Separation Membrane Main Body and Channel Member»

As shown in Figs. 1 to 3, a to f refer to the following values, respectively.

a: Length of a separation membrane main body
b: Spacing between adjacent channel members in the width direction of a separation membrane main body
c: Thickness (height) of each channel member (distance in a vertical direction between the permeate-side face of a separation membrane main body and the surface of each channel member)
d: Width of each channel member
e: Spacing between adjacent channel members in the length direction of a separation membrane main body
f: Length of each channel member

Measurements of the values a to f can be made by means of e.g. a commercially available configuration analysis system or a microscope. Each value can be determined by carrying out measurements at 30 sites or more on one sheet of separation membrane, and calculating an average value by dividing the sum total of the measurement values by the number of measurement sites. It is essential only that each average value thus determined through the measurements made at at least 30 sites is in the range specified above.

(Length a of Separation Membrane Main Body)

The length a is a distance from one end to the other of the separation membrane main body 2 in the second direction. When this distance is not uniform, the length a can be determined by measuring the distance at 30 sites or more on one sheet of separation membrane main body 2 and calculating the average of measurement values obtained.

(Spacing b between Adjacent Channel Members in First Direction)

The spacing b between adjacent channel members 3 in the first direction corresponds to the width of flow path 5. When the width of one flow path 5 is not uniform in one cross section, or equivalently, the sides of adjacent two channel members 3 are not parallel, the average value of the maximum and minimum widths of one flow path 5 in one cross section is determined, and further the average of such average values is calculated. As shown e.g. in Fig. 3, when each channel member 3 is thin at its top and thick at its bottom, namely trapezoidal in shape, in a cross section perpendicular to the second direction, a distance between adjacent two channel members on the top side and that on the bottom side are measured first, and then an average value thereof is calculated. Next such distances between adjacent channel members 3 are measured on arbitrarily chosen 30 cross sections or more, and the average values thereof are calculated in individual cross sections. And an arithmetic average value is further calculated from these average values, thereby obtaining the spacing b.
An increase in spacing b, though lowers pressure drop, is prone to cause membrane sinking. Conversely, the smaller the spacing b, the less prone the membrane becomes to sink, but the greater the pressure drop becomes. Considering performance and stability in the form of a membrane element, it is appropriate that the spacing b is in a range of 0.05 mm to 5 mm, and as long as the spacing b is in this range, the pressure drop can be lowered while suppressing the membrane sinking. The spacing b is more preferably from 0.2 mm to 2 mm, further preferably from 0.3 mm to 0.8 mm.

(Thickness (Height) c of Channel Member)

The thickness c is a distance in a vertical direction from the surface of the separation membrane main body to the top of each channel member. As shown in Fig. 3, the thickness c is a distance from the permeate-side face of the separation membrane main body to the highest part of each channel member 3 in a cross section vertical to the second direction. In other words, when the thickness of each channel member is concerned, the thickness of a portion impregnated into the substrate is not taken into account. The thickness c is a value obtained by measuring thicknesses of 30 or more channel members 3 and calculating the average of the measured thicknesses. The channel member thickness c may be obtained by observing cross sections of channel members in one plane, or it may be obtained by observing cross sections of channel members in two or more planes.
When the thickness c is great, the flow resistance becomes low. On the other hand, when the thickness c is small, the number of membranes per element increases, but degradation in separation characteristics and permeation performance occurs. As a result, the fresh-water producing capability of the element is reduced, and the running cost for increasing the amount of fresh water produced becomes high. In consideration of balance of the foregoing various performance capabilities and the running cost, it is therefore appropriate that the thickness c is from 0.03 mm to 0.8 mm, more preferably from 0.05 mm to 0.5 mm, further preferably from 0.1 mm to 0.4 mm.
Additionally, as mentioned above, when the thickness c is small, the quantity of separation membrane loaded in a separation membrane element can be increased, whereby an increase in flow resistance is caused, but the amount of fresh water produced tends to increase through the enlargement of the area of the separation membrane. Thus the thickness c can be chosen as appropriate with reference to operating conditions and purpose of the element.

Moreover, it is appropriate to minimize a difference between the heights of adjacent channel members among a plurality of channel members adhered to the separation membrane (more specifically the substrate). When the height difference is large, the separation membrane becomes warped under pressure filtration, and there may be cases where defects develop in the separation membrane. It is therefore appropriate for the difference between the heights of adjacent channel members to be 0.1 mm or less, more preferably 0.06 mm or less, further preferably 0.04 mm or less.

For the same reason, it is appropriate that the maximum difference in thicknesses (the maximum difference in heights) of all channel members provided on the separation membrane is 0.25 mm or less, especially preferably 0.1 mm or less, further preferably 0.03 mm or less.

(Width d of Channel Member)

The width d is measured as follows. To begin with, the average of the maximum width and the minimum width of one channel member 3 in one cross section vertical to the first direction is calculated. More specifically, on one channel member thin at the top and thick at the bottom as shown in Fig. 3, widths at the bottom end and at the top end of the channel member are measured, and an average value thereof is calculated. Such an average value is calculated in each of cross sections at 30 sites or more, and an arithmetic average is further calculated from these average values.

It is appropriate that the width d is 0.2 mm or greater, more preferably 0.3 mm or greater. As long as the width d is 0.2 mm or greater, each channel member 3 can retain its shape even when pressure is imposed thereon under operation of the separation membrane element, whereby the permeate-side flow path can be formed with stability.

In addition, it is appropriate that the width d is 2 mm or smaller, more preferably 1.5 mm or smaller. When the width d is 2 mm or smaller, it is possible to ensure a sufficient permeate-side flow path.

When the width d of each channel member is greater than the spacing b between channel members adjacent to each other in the first direction, pressure put on each channel member can be decentralized.

In Figs. 1 to 3, each channel member 3 is formed so as to have a length greater than its width. The channel member like this is also referred to as "a wall-like thing".

(Spacing e between Adjacent Channel Members)

The spacing e is a distance between adjacent channel members 3 in the second direction. It is appropriate that the spacing e is from 0 mm to 100 mm, more preferably from 0 mm to 30 mm. When the spacing e falls within such a range, pressure drop becomes relatively low while making it possible to inhibit the membrane from sinking.

As shown in Fig. 1, when each channel member 3 is continuously provided on the separation membrane main body 2 from one end to the other thereof in the second direction, the spacing e is 0 mm.

(Length f of Channel Member)

The length f is a length of each channel member 3 in the second direction. The length f can be determined by measuring lengths of 30 or more channel members among the channel members 3 provided on one sheet of the separation membrane 1 and calculating the average of the measured lengths. It is essential only that the length f of each channel member is not greater than the length a of the separation membrane main body. When each channel member 3 is continuously provided from the inner-side end to the outer-side end in the winding direction of the separation membrane 1, the length f of the channel member is equivalent to the length a of the separation membrane main body.

It is appropriate that the length f is 10 mm or longer, more preferably 20 mm or longer. By adjusting the length f to be 10 mm or longer, it becomes possible to ensure flow path even under pressure.

(Relations between Dimensions a to f)

As mentioned above, channel members according to embodiments of the invention can lower pressure drop as compared with traditional channel members having continuous shapes such as tricot. In other words, according to the technique in embodiments of the invention, the leaf length can be made longer than that realized by traditional techniques, whereby the number of leaves can be reduced.

Additionally, the term membrane leaf (or simply referred to as "leaf") refers to a two-sheet set of separation membranes cut to a length suitable for incorporation into an element and made to face each other at their respective feed-side faces (or one sheet of separation membrane folded in two with the feed-side face inward). In the membrane leaf, feed-side channel members are sandwiched between separation membranes.

By adjusting the dimensions a to f to satisfy the following mathematical expressions, the number of leaves can be notably reduced:

i) $a^2f^2(b+c)^2(b+d)\times10^{-6}/b^3c^3(e+f)^2\leq1,400$,

ii) $850 \leq a \leq 7,000$,

iii) $b \leq 2$,

iv) $c \leq 0.5$, and

v) $0.15 \leq df/(b+d)(e+f) \leq 0.85$.

(Ratio between Channel Member Width and Spacing between Adjacent Channel Members)

The greater the placement area of channel members, or equivalently, the wider the channel member width, the easier it becomes to ensure stability of the permeate-side flow path under pressure filtration. However, the narrower the permeate-side flow path, or equivalently, the smaller the spacing b between adjacent channel members (the channel width), the higher the flow resistance becomes. Conversely, the smaller the placement area of channel members, the lower the flow resistance becomes, but the more difficult it becomes to ensure stability of the flow path under pressure filtration. Therefore, a balance between the channel member width and the spacing between adjacent channel members is important, and it is appropriate that the ratio of the spacing b between adjacent channel members to the channel member width d in the first direction of the channel members is from 0.3 to 1.3. And the lower limit of the ratio of the spacing b between adjacent channel members to the channel member width b is more preferably 0.4 or more, and the upper limit thereof is more preferably 1 or less, further preferably 0.75 or less.

(Ratio between Width and Thickness (Height) of Channel Member)

Since the channel members are heat-treated under pressure in the invention, there is a tendency to lower the channel member thickness (height) and broaden the channel member width, namely a tendency to make the flow path small. Then the flow resistance becomes high, and the efficiency in fresh water production through pressure filtration is lowered. Therefore, a balance between the channel member width and the channel member height is important, and it is appropriate that the ratio of the channel member thickness (height) to the channel member width d is from 0.2 to 1, more preferably from 0.25 to 0.7.

(Shape of Channel Member)

The shape of each channel member has no particular restrictions, but such a shape as to reduce flow resistance of the flow path and stabilize the flow path during permeation may be chosen. In this respect, the shape of each channel member in any of cross sections vertical to the face direction of the separation membrane may be a rectangular shape, a trapezoidal shape, a double side-curved quadrilateral shape, or a combination of any two of these shapes.

When the cross-sectional shape of each channel member is a trapezoid and the top width of the trapezoid is e.g. small in the extreme as compared with the bottom width, the channel width on the top side of channel members becomes great and tends to cause membrane sinking as compared with the bottom side even though the channel width on the bottom side of channel members is a spacing allowing inhibition of membrane sinking under pressure filtration. In other words, when a difference between the top width W2 and the bottom width W1 is too large, membrane sinking under pressure filtration tends to occur on the greater width side. It is therefore appropriate that the ratio of the top length to the bottom length is from 0.6 to 1.4, more preferably from 0.8 to 1.2.

From the viewpoint of reducing the flow resistance, the cross-sectional shape of each channel member is preferably a rectangular shape vertical to the separation membrane face mentioned hereinafter. In addition, each channel member may be shaped so that the width thereof decreases with increase in distance from the bottom, or conversely it may be shaped so that the width thereof increases with distance from the bottom, or it may be shaped so as to have the same width irrespective of height from the separation membrane surface.

However, so long as deformation of channel members is not so heavily under pressure filtration, the top side of channel member may be round in its cross-sectional shape.

When each channel member is made from a thermoplastic resin, the shape thereof can be adjusted freely to satisfy required conditions concerning separation characteristics and permeation performance by making changes to the treatment temperature and the kind of thermoplastic resin to choose.

On the other hand, the channel member configuration in the plane direction of the separation membrane may be e.g. like a configuration of dots or lines. Examples of the lines include straight lines, curved lines, waveform lines such as saw-toothed lines, and broken lines.

In addition, when the channel member configuration in the plane direction of the separation membrane is like a configuration of dots or straight lines, adjacent channel members may be placed in nearly parallel with each other. The expression of "placed in nearly parallel" is intended to include e.g. cases where adjacent channel members are disposed on the separation membrane so as not to cross each other, and cases where an angle between extended lines of adjacent channel members is from 0° to 30° or from 0° to 15° or from 0° to 5°.

For the purpose of forming the flow path with stability, it is appropriate that the separation membrane main body is inhibited from sinking when the separation membrane main body is pressurized in a separation membrane element. For inhibition of the membrane sinking, it is appropriate that the area of contact between the separation membrane main body and the channel members is made great, or equivalently, the total area of channel members is made great with respect to the area of the separation membrane main body (the total projected area of channel members is made great with respect to the membrane face of the separation membrane main body). On the other hand, for the purpose of reducing pressure drop, it is appropriate that the cross-sectional area of the flow path is made large. When a cross section of the flow path is concerned, it is appropriate that the cross-sectional shape of the flow path is the shape like a concave lens in order to ensure a large cross-sectional area of the flow path while ensuring a large contact area between the separation membrane main body and each channel member in the direction vertical to the length direction of the flow path. In addition, each channel member 3 may be a rectangular shape with no change in width thereof in cross-sectional shape in the direction vertical to the winding direction. On the other hand, so long as the width of each channel member varies to an extent of exerting no influence upon separation membrane performance, the cross-sectional shape in the direction vertical to the winding direction may be a shape varying in width, including cross-sectional shapes of a trapezoidal wall-like thing, an elliptic column, an elliptic cone, a quadrangular pyramid and a hemisphere.

The configuration of channel members should not be construed as being limited to those shown in Figs. 1 to 3. When channel members are provided on the permeate-side face of the separation membrane main body in accordance with e.g. a hot-melt technique, the configuration of channel members can be adjusted freely to satisfy required conditions concerning separation characteristics and permeation performance by making changes to the treatment temperature and the kind of hot-melt resin to choose.

In Figs. 1 to 3, the plane shape of each channel member 3 is linear in the length direction. However, so long as each channel member 3 is in a state of projecting from the surface of the separation membrane main body 2, and moreover the plane shape thereof does not contribute to impairment of effects intended as a separation membrane element, the linear shape can be changed to another shape. Specifically, the shape of each channel member in the plane direction may be a curved line shape, a wavy line shape or the like. In addition, a plurality of channel members incorporated in one sheet of separation membrane may be shaped so as to differ in at least either width or length from each other.

<Projected Area Ratio>

From the viewpoint of reducing flow resistance in the permeate-side flow path in particular and forming the flow path with stability, it is appropriate that the ratio of the projected area of a foreign material to the area of the permeate-side face of the separation membrane main body is from 0.03 to 0.85, more preferably from 0.2 to 0.75, further preferably from 0.3 to 0.6. Additionally, the term "projected area ratio" refers to the value obtained by cutting a piece measuring 5 cm by 5 cm from the separation membrane, determining a projected area of channel members through the projection onto the plane parallel to the plane direction of the separation membrane, and then dividing the projected area by the cut area (25 cm$^2$).

<Impregnation into Substrate>

As shown in Fig. 3, some ingredient in each channel member 3 may be impregnated into the separation membrane main body 2, more specifically into the substrate 201. When channel members 3 are disposed on the substrate-side of the separation membrane, namely on the permeate-side of the separation membrane, and heating is carried out from the substrate side in accordance with the hot-melt technique or the like, impregnation of the separation membrane with the channel members 3 progresses from the rear side of the separation membrane (namely, the permeate-side face of the separation membrane main body) toward the front side (namely, the feed-side face of the separation membrane main body). As the impregnation progresses, the adhesion between the substrate and the channel members becomes stronger, and the channel members becomes less prone to peel off the substrate even under pressure filtration. In Fig. 3, the portion of the substrate into which some ingredient in each channel member is impregnated is described as "impregnated portion 31".

However, when some ingredient in each channel member is impregnated into the neighborhood of the separation functional layer, the impregnated channel member destroys the separation functional layer under pressure filtration. When some ingredient in each channel member is impregnated into the substrate, it is therefore appropriate that the proportion of channel member-impregnated portion thickness T2 to substrate thickness T1 (namely, impregnation rate) is from 5% to 95%, more preferably from 10% to 80%, further preferably from 20% to 60%. Additionally, the impregnated portion thickness in the calculation of the above proportion refers to the maximum value of thicknesses of the impregnated portion 31 corresponding to the channel member in one cross section.

By disposing channel members on the permeate-side face of the separation membrane main body, it becomes possible to design a membrane element low in flow resistance and high in pressure resistance even in the case of having a small projected area ratio, as compared with membrane elements using traditional channel members of continuous shape such as tricot and the like.

[2. Separation Membrane Element]

(2-1) Outline

As shown in Fig. 4, the separation membrane element 100 includes a water collection tube 8 and any of the configurations described above, and is provided with a separation membrane 1 wound around the water collection tube 8. In addition, the separation membrane element 100 further includes members not shown in the figure, including end plates.

(2-2) Separation Membrane

The separation membrane 1 is wound around the water collection tube 8, and placed so that the width direction thereof is brought into line with the length direction of the water collection tube 8. As a result, the separation membrane 1 is placed so that the length direction thereof is brought into line with the winding direction thereof

Thus, on the permeate-side face 22 of the separation membrane main body 2 incorporated into the separation membrane 1, channel members 3 as wall-shaped members are disposed discontinuously along at least the length direction of the water collection tube 8. More specifically, each flow path 5 is formed continuously from the outer-side end to the inner-side end in the winding direction. As a result, permeate easily reaches a central pipe of the water collection tube 8, or equivalently, the flow resistance becomes low, and hence fresh water is obtained in a large amount.

The wording "inner side in the winding direction" and the wording "outer side in the winding direction" are as shown in Fig. 4. In other words, the inner side in the winding direction and the outer side in the winding direction correspond to the end portions near to and distant from the water collection tube 8 on the separation membrane 1, respectively.

As mentioned above, the channel members may not reach to edges of the separation membrane. For instance, channel members may not be provided on the outer-side end portion of envelope-shaped membrane in the winding direction and both end portions of envelope-shaped membrane in the length direction of the water collection tube.

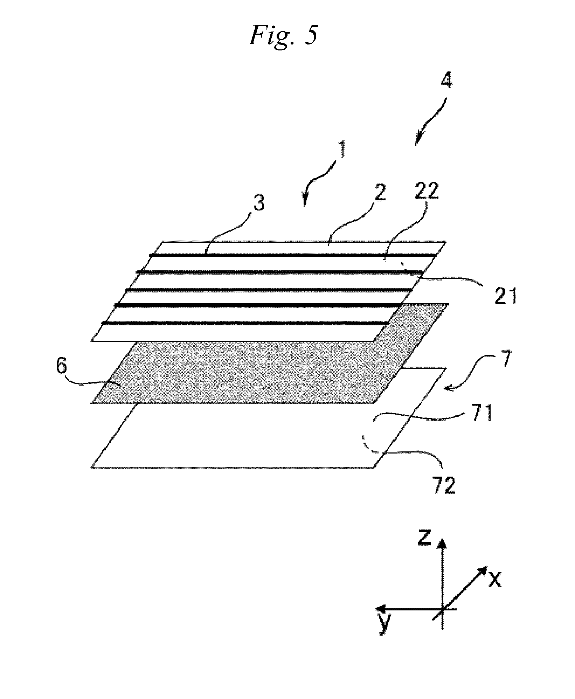

As shown in Fig. 5, two separation membranes form a separation membrane pair 4. The separation membrane 1 is placed so that the feed-side face 21 thereof faces the feed-side face 71 of the other separation membrane 7 across the feed-side channel member 6. In the separation membrane element 100, feed-side flow paths are formed between the feed-side faces of separation membranes facing each other, and permeate-side flow paths are formed between the permeate-side faces of the separation membranes facing each other.

Additionally, the other separation membrane not shown in the figure is further superposed on the separation membrane 1, and these membranes are formed into an envelope-shaped membrane. The term "envelope-shaped membrane" refers to a pair of separation membranes which are laid so that the permeate-side faces thereof face each other. The envelope-shaped membrane is rectangular in shape, and among gaps between the permeate-side faces, only the gap at one edge on the inner side in the winding direction left open and the gaps at the three other edges are sealed so that permeate flows into the water collection tube 8. In this manner, separation membranes are formed into an envelope-shaped membrane with permeate-side faces turned inward. The permeate is isolated from the feed water with this envelope-shaped membrane.

Examples of a mode of sealing include an adhesion mode using an adhesive, a hot-melt technique or the like, a fusion mode using heating, laser light or the like, and a mode of inserting a rubber sheet into a gap. The sealing carried out in an adhesion mode is especially preferred because it is most convenient and produces high effect.

As to the feed-side face of the separation membrane, the inner-side end in the winding direction is closed by folding or sealing. By sealing the feed side of the separation membrane, not folding, the end of the separation membrane resists being deformed. By inhibiting occurrence of deformation in the neighborhood of a fold, gaps are prevented from appearing between separation membranes at the time of winding and leaks from the gaps are prevented from occurring.

Additionally, the separation membranes facing each other may have the same constitution, or they may differ in constitution from each other. More specifically, it is essential in a separation membrane element only that at least one of two sheets of separation membranes facing each other is provided with permeate-side channel members, and hence separation membranes having permeate-side channel members and those having no permeate-side channel members may be stacked in alternation. For convenience of explanation, however, the term "separation membrane" used in explanations of the separation membrane element and matters related thereto is intended to also include separation membranes having no permeate-side channel members (e.g. the membrane having the same constitution as a separation membrane main body).

Separation membranes facing each other at their individual permeate-side faces or feed-side faces may be two sheets of separation membranes different from each other, or they may be one sheet of separation membrane folded in two.

(2-3) Feed-Side Flow Path

<Channel Member>

The separation membrane element 100 has, between feed-side faces of superposed separation membranes, channel members (not shown in the figure) which are higher than 0 and lower than 1 in ratio of the total of their projected areas to the area of separation membrane 1 (hereafter abbreviated as projected area ratio). And it is appropriate that the projected area ratio is from 0.03 to 0.50, further preferably from 0.10 to 0.40, particularly preferably from 0.15 to 0.35. When the projected area ratio is in a range of 0.03 to 0.50, flow resistance can be reduced to a relatively small value.
Additionally, the term "projected area ratio" as used herein refers to the value obtained by cutting a piece measuring 5 cm by 5 cm from the separation membrane with feed-side channel members, determining the total projected area of the feed-side channel members through the projection onto the plane parallel to the plane direction of the separation membrane, and then dividing the total projected area by the cut area.
The feed-side channel members have no particular restrictions as to their shape, and the shape thereof may be a continuous shape or a discontinuous shape. The channel member having a continuous shape may be a member referred to as film or net. The term "continuous shape" used herein means that the channel member is continuous throughout its dimensions in a substantial sense. When this continuous shape is concerned, however, discontinuities may be included in part of the channel member to an extent of not causing problems, including reduction in amount of fresh water produced.
Examples of a discontinuous shape include various shapes, such as a shape formed of dots (including perfect circular dots and elliptical dots) or a shape formed of straight, curved, broken or like lines.
It is appropriate that the thickness of the feed-side channel member is 80 $\mu$m or greater, more preferably 100 $\mu$m or greater. By adjusting the thickness of the feed-side channel member to be 80 $\mu$m or greater, flow resistance can be reduced. In addition, it is appropriate that the thickness of the feed-side channel member is 2,000 $\mu$m or below, more preferably e.g. 1,500 $\mu$m or below, or 1,000 $\mu$m or below. By adjusting the thickness of the channel member to be 2,000 $\mu$m or below, the membrane area per element can be widen.
The thickness of the feed-side channel member in the separation membrane can be determined in the same manner as that of the permeate-side channel member is determined hereinbefore.

<Membrane Worked into Uneven Configuration>

Feed-side flow path may be formed with an uneven configuration of the separation membrane main body itself. The height of concave portions, the height of convex portions, the pitch between concave and convex portions, and so on can be adjusted similarly to those of the channel member.

(2-4) Permeate-Side Flow Path

As mentioned above, the permeate-side flow path is formed with permeate-side channel members provided on the separation membrane main body.

(2-5) Water Collection tube

It is essential only that a water collection tube 8 is configured to allow passage of permeate through itself, and materials, shape and size thereof are not particularly limited. For example, as shown in Fig. 4, a cylindrical member having a side plane with a plurality of pores (not shown in the figure) is used as the water collection tube 8.

[3. Method for Producing Separation Membrane]

(3-1) Separation Membrane Main Body

Methods for producing the separation membrane main body, though mentioned hereinbefore, are summarized below in brief.
A resin solution prepared by dissolving a resin in a good solvent is cast onto a substrate and immersed in pure water to form a porous supporting layer, whereby the porous supporting layer and the substrate are combined. Thereafter, as mentioned above, a separation functional layer is formed on the porous supporting layer. In order to enhance separation performance and permeation performance, chemical treatment using chlorine, acid, alkali, nitrous acid or so on is further carried out as required, and besides, monomers are washed out. Thus a continuous sheet of separation membrane main body is produced.

Additionally, before or after the chemical treatment, an uneven pattern may be formed on the separation membrane main body by means of embossing or the like.

(3-2) Permeate-Side Channel Member

<Configuration>

The method for producing the separation membrane includes a step of providing discontinuous channel members on the permeate-side face of the separation membrane main body. This step may be carried out at any stage of separation membrane production. For example, channel members may be provided before formation of the porous supporting layer on the substrate, or they may be provided after formation of the porous supporting layer and that before formation of the separation functional layer. On the other hand, the channel members may be provided after formation of the separation functional layer, and that before or after the foregoing chemical treatment.

Examples of a method for configuring channel members include a coating method, a printing method and a spraying method. And examples of an apparatus used in such a method include a nozzle-type hot melt applicator, a spray-type hot melt applicator, a flat nozzle-type hot melt applicator, a roll coater, an extrusion coater, a gravure printer and a sprayer.

<Pressurization>

The permeate-side channel members may be subjected to pressure treatment. By pressure treatment, the density of channel members is heightened, and the channel members are inhibited from deforming under pressure filtration, thereby ensuring flow path stability.

In addition, pressure treatment crushes fine asperities on channel members, and makes the channel member surface smooth. Further, the heights of channel members in the overall separation membrane are made uniform. Thus the pressure treatment can inhibit localized or nonuniform deformation from occurring under pressure filtration, and allows further improvements in performance and durability.

The method for pressure treatment is not limited to specific one so long as it can impose pressure on channel members. Examples thereof include a method of applying pressure by the use of a solid body such as a roll, and a method of applying pressure through the medium of liquid such as water.

Additionally, in the pressure treatment using a roll, the roll used may be a roll made from any of materials including metal, rubber and paper, and it has no particular restriction so long as it can contribute to effects of the invention.

The pressure treatment may be given to a planar membrane before the membrane is formed into an element, or it may be given to a wound membrane after an element is formed. From the viewpoint of convenience in process, it is advantageous to use a roll in pressure treatment given to a planar membrane, while in the case of carrying out pressurized heat treatment after element formation, it is advantageous to use liquid like water as a pressurizing medium.

It is appropriate that the pressure at the time of pressure treatment is 1 MPa or higher. By adjusting the pressure to fall within such a range, the channel member density can be made sufficiently high. In addition, it is appropriate that the pressure at the time of pressure treatment is 10 MPa or lower. By adjusting the pressure to fall within such a range, the channel members are inhibited from being broken.

The temperature conditions at the time of pressurization are not limited to specific numerical values, and can be chosen with reference to the channel member composition, the purpose of using the separation membrane obtained, the target channel member density and so on. The pressure treatment may be carried out under any of cooling, room-temperature and heating conditions. However, higher temperatures at the time of pressure treatment allow the greater improvement in workability of resins because the more easily can they soften resins. On the other hand, higher temperatures become a factor in membrane degradation. It is therefore appropriate that the temperature at the pressurized heat treatment is from 5°C to 190°C, especially from 25°C to 100°C. The temperature at the time of pressurization can be adjusted by setting the temperature of e.g. a roll or liquid used for pressurization at the desired temperature.

On the occasion of pressure treatment, the separation membrane may be in a state of containing a liquid like water, or in a state of being dried after receiving impregnation with a wetting agent, such as glycerin. In the case of carrying out pressure treatment in particular, the separation membrane may receive pressure treatment in a state that it contains a liquid, or that a wetting agent or a protective film is spread on the surface thereof so as to avoid damage of the membrane surface due to pressurized heat treatment.

[4. Method for Producing Separation Membrane Element]

(4-1) Outline

In the producing of a separation membrane element, any of traditional element producing systems can be used. And as a method for producing the element, any of the methods described in references (e.g. JP-B-44-14216, JP-B-4-11928 and JP-A-11-226366) can be adopted. Details on them are as follows.

(4-2) Formation of Feed-Side Flow Path

When the feed-side channel member is a continuously-formed member such as a net, the feed-side flow path can be formed by superposing such a feed-side channel member upon a separation membrane.

Additionally, feed-side channel members can be formed into a discontinuous or continuous shape by applying coatings of resin directly to a separation membrane. Also in the case of forming flow path with feed-side channel members adhered to a separation membrane main body, configuring the feed-side channel members may be regarded as part of a method for producing a separation membrane.

Alternatively, the flow path may be formed by working a separation membrane main body into an uneven configuration. Examples of a working method for forming an uneven configuration include methods of emboss forming, hydraulic forming and calendering. The embossing condition, the configuration formed by embossing and so on can be changed in response to performance required of the separation membrane element and so on. The working for forming unevenness may be regarded as part of a method for producing a separation membrane.

(4-3) Lamination and Winding of Separation Membranes

A sheet of separation membrane is folded into two leaves with the permeate-side face inward, and the two leaves are laminated. Alternatively, two sheets of separation membranes are superposed upon each other with their permeate-side faces inward and laminated. In such a way, an envelope-shaped membrane is formed. As mentioned hereinbefore, three edges of the envelope-shaped membrane are sealed. The sealing can be performed e.g. by bonding with an adhesive, adhesion using a hot-melt technique, or fusion using heat or laser light.

The adhesive suitably used in forming an envelope-shaped membrane has a viscosity within a range of 40 poise (ps) to 150 ps, more preferably 50 ps to 120 ps. There may be cases where wrinkles occur in a separation membrane to lower performance of the separation membrane element. By choosing an adhesive having a viscosity of 150 ps or lower, however, wrinkles can be prevented from occurring when the separation membrane is wound around a water collection tube. In addition, when the adhesive has a viscosity of 40 ps or higher, ooze of the adhesive from between the separation membranes can be prevented, and the risk of adhesion of the adhesive to undesired portions can be reduced. Additionally, 1 ps is equal to 0.1 Pa·s.

When the amount of an adhesive applied is concerned, it is appropriate that the adhesive is applied in an amount corresponding to a width of the adhesive-applied portion of 10 mm to 100 mm after the separation membrane is wound around a water collection tube. Thereby, the separation membranes are bonded together with certainty, and flow of a raw fluid into the permeate side is prevented. In addition, a relatively large effective membrane area can be secured.

As the adhesive, a urethane-based adhesive is suitable, and in order to adjust the viscosity of the adhesive to fall within the range of 40 ps to 150 ps, it is appropriate that isocyanate as a main ingredient and polyol as a curing agent is mixed in a isocyanate-polyol ratio of 1:1 to 1:5. As for the viscosity of the adhesive, the viscosity of each of the main ingredient alone, the curing agent alone, and the mixture in a specified blending ratio is previously measured by a Brookfield viscometer (JIS K 6833).

The separation membrane(s) coated with an adhesive in the foregoing manner is (are) placed so that the closed portion of the envelope-shaped membrane(s) is situated on the inner side in the winding direction, and wound around the water collection tube. Thus the separation membrane(s) is (are) wound in a spiral fashion.

(4-4) Other Processes

The method for producing a separation membrane element may include a step of further winding film, filaments and the like onto the outside of a separation membrane-wound body formed in the foregoing manner, and additional other steps, such as a step of cutting the edges of separation membrane(s) in the length direction of the water collection tube and evening up them and a step of attaching end plates.

[5. Use of Separation Membrane Element]

Separation membrane elements may be used as a separation membrane module by being connected in series or in parallel and housed in a pressure container.

In addition, the separation membrane element and the separation membrane module can be configured as a fluid separation apparatus by being combined with a pump for feeding a fluid into them and a fluid pre-treating unit. By using such an apparatus, the feed water is separated e.g. into permeate like drinkable water and concentrate not having passed through the membrane, whereby water meeting the intended purpose can be obtained.

The higher the pressure during operation of the fluid separation apparatus, the more improvement in removal efficiency is achieved, but the more energy is required for the operation. With consideration given to this point and further to maintenance capabilities of feed flow path and permeate flow path of the separation membrane element, it is appropriate that the operation pressure at the time of permeation of water to be treated through the membrane module is from 0.2 MPa to 5 MPa. Although the salt removal ratio decreases with increases in feed water temperature, as the feed water temperature decreases, so does the membrane permeation flux. It is therefore appropriate that the feed water temperature is from 5°C to 45°C. In addition, as long as feed water has its pH in a neutral region, deposition of magnesium scale or the like and membrane degradation are inhibited from occurring even when the feed water is a liquid containing a high concentration of salts, such as seawater.

A fluid which can be treated by means of the separation membrane element is not particularly limited, but when the separation membrane element is used in water treatment, water capable of being fed into the element is e.g. a liquid mixture containing 500 mg/L to 100 g/L of TDS (Total Dissolved Solids), such as seawater, brackish water or waste water. In general, TDS stands for Total Dissolved Solids, and is expressed in weight/volume, or weight ratio. By definition, TDS can be calculated from the weight of matter remaining after evaporation of a solution filtered through a 0.45-$\mu$m filter at a temperature of 39.5° C to 40.5° C, but more conveniently it can be converted from practical salinity (S).

EXAMPLES

The invention is illustrated below in more detail by reference to the following Examples. However, the invention should not be construed as being limited to these Examples.

(Permeate-Side Height Difference of Separation Membrane)

An average height difference was analyzed from the result of permeate-side height measurement on a separation membrane measuring 5 cm by 5 cm by means of a high-precision configuration analysis system KS-1100 made by KEYENCE CORPORATION. Measurements were made on 30 sites where a height difference of 10 $\mu$m or greater was observed, and the average value was calculated by dividing the sum total of measurement values by the number of all measurement sites.

Additionally, the expression of "height difference on the permeate side" refers to the thickness of each channel member when channel members are provided on the permeate-side face, while it refers to the height difference between concave and convex portions when the separation membrane main body is formed so as to have an uneven surface.

(Pitch and Spacing between Channel Members)

Photographs of cross sections of arbitrarily chosen 30 channel members were taken under a scanning electron microscope (S-800, made by Hitachi Ltd.) set at a magnification of 500 times, and the pitch and spacing (the value b mentioned hereinbefore) between adjacent cross sections of channel members were measured.

Additionally, the pitch is an average value obtained by measuring horizontal distances between the highest positions in adjacent high portions at 200 sites on the permeate side of the separation membrane and calculating from these measurement values.

(Channel Member Projected Area Ratio)

A piece measuring 5 cm by 5 cm was cut from a separation membrane provided with channel members, and the total projected area of all the channel members therein was measured by using a laser microscope (set at a magnification chosen from a range of 10 to 500 times) while moving the stage. The value determined by dividing the projected area obtained by projecting the channel members from the permeate side or the feed side of the separation membrane by the cut area is defined as the projected area ratio.

(Melting Temperature Measurement Made on Channel Member)

By the use of DSC6200 made by Seiko Instruments Inc., the melting temperature of a channel member was determined in a procedure that a channel member sample in an amount of about 10 mg was heated up to a temperature of 250°C in an atmosphere of nitrogen, and kept as it was for 10 minutes, then cooled from 250°C to 30°C at a rate of 10°C/min and kept at 30°C for 5 minutes, and further heated up to 250°C at a rate of 10°C/min, and the thus obtained endothermic curve was searched for peak points. Specifically, the endothermic peak in the third stage of the procedure is defined as the melting temperature, and when two or more peaks are observed, the peak top on the highest temperature side is presented as the melting temperature in each of the following Tables.

(Ratio between Weight of Channel Member and Volume of Channel Member, Exclusive of Portion Impregnated into Permeate-Side Face)

A 5-square-cm piece was cut from a channel member-provided region a separation membrane, and the weight thereof was measured. A piece having the same area was cut from a membrane configured similarly to the separation membrane main body of the separation membrane, and the weight thereof was measured. And this weight was subtracted from the weight of the separation membrane as a whole, thereby obtaining the weight of channel members on the permeate side.

On the same 5-square-cm sample piece as used in weight measurement, length and cross-sectional area measurements were made, and from these measurement values the volume was calculated. And from the thus obtained weight and volume of channel members, the density was calculated.

(Amount of Fresh Water Produced)

In a separation membrane or a separation membrane element, an aqueous NaCl solution having a concentration of 1,500 mg/L and a pH value of 6.5 was used as feed water. Operation was continued for 100 hours under conditions that the operation pressure was 2.5 MPa and the temperature was 25°C, and thereafter sampling was carried out for 10 minutes. The amount (cubic meter) of water permeated per a day per unit area of membrane was represented as amount of fresh water produced ($m^3$/day).

Additionally, the salt concentration in such feed water is considered to correspond to the so-called brackish water.

(Desalination Rate (TDS Removal Ratio))

TDS concentrations in permeate and feed water obtained by samplings in measurement on amount of fresh water produced were determined by conductivity measurements, and a TDS removal ratio was calculated by the following equation. TDS removal ratio (%) = $100 \times \{1-(\text{TDS concentration in permeate/TDS concentration in feed water})\}$

When the measurement value after 2 hours differs by 0.1% or more from that after 1 hour, the result thereof is additionally noted.

(Pressure Resistance)

An aqueous NaCl solution having a concentration of 1,500 mg/L and a pH value of 6.5 was used as feed water, and an element was operated for 1 minute under conditions that the operation pressure was 2.5 MPa and the temperature was 25°C, and the operation was stopped. This (start-stop) cycle was repeated 1,000 times, and thereafter the separation membrane element was disassembled and channel member height differences were measured. Pressure resistance was defined by the following expression.

$$\text{Pressure resistance (\%)} = (\text{Channel member height difference after start-stop cycle repeated 1,000 times}) / (\text{Channel member height difference before pressure filtration}) \times 100$$

(Heat Resistance)

On a separation membrane before adhering channel members and the separation membrane after adhering channel members, the foregoing fresh-water production test was conducted. Heat resistance was defined by the following

expression.

$$\text{Heat resistance (\%) = (Amount of fresh water produced after adhering channel}$$

$$\text{members) / (amount of fresh water produced before adhering channel members)} \times 100$$

(Example 1)

Onto a nonwoven fabric (fiber diameter: 1 decitex, thickness: 90 $\mu$m, air permeability: 0.9 cc/cm$^2$/sec) obtained from polyethylene terephthalate fibers by the use of a paper-making method, a 15.0 weight% DMF solution of polysulfone was cast into a layer having a thickness of 180 $\mu$m at room temperature (25°C), immediately immersed into pure water and left standing for 5 minutes. By further immersing the thus cast fabric in 80°C hot water for 1 minute, a supporting membrane of fiber-reinforced polysulfone was obtained, and formed into a roll of porous supporting layer (thickness of 130 $\mu$m).
Thereafter, the roll of porous supporting layer was wound back into the flat shape, and the polysulfone surface was immersed in a 4.0 weight% aqueous solution of m-PDA for 2 minutes. The thus treated supporting membrane was drawn up slowly to the vertical direction. Then, excess of the water solution was removed from the supporting membrane surface by spraying of nitrogen from air nozzles. Further, the resulting supporting membrane was coated with an n-decane solution containing 0.185 weight% of trimesic acid chloride so that the surface thereof was moistened thoroughly, and left standing for 1 minute. Thereafter, the membrane was subject to air blow for removal of any excess of the solution from the surface thereof and washed with hot water of 80°C, and the water was drained off the membrane by air blow. Through the foregoing steps, a separation membrane roll was obtained.
Next, a saponified ethylene-vinyl acetate copolymer resin (trade name: Melthene 6822X, produced by Tosoh Corporation) was applied in a configuration of dots to the permeate-side face at a resin temperature of 160°C at a transport speed of 2.5 m/min by means of a gravure roll as a backup roll temperature was controlled to 20°C. After solidification of the resin, pressurized heat treatment was carried out at a clearance of 0.26 mm under conditions that the pressure was 3 MPa and the temperature was 50°C, whereby permeate-side channel members were formed.
The dimensions of the thus formed individual channel members were as shown in Table 1.
In addition, a 43-square-cm piece was cut from the separation membrane obtained in the foregoing manner, housed in a pressure container, and made to operate under the foregoing conditions to obtain permeate. The amount of fresh water produced, desalination rate, pressure resistance and heat resistance found therein were as shown in Table 1.
Conditions and evaluation results in each of the following Examples and Comparative Examples are shown in Tables 1 to 4. Additionally, height differences between adjacent channel members on the permeate side were 30 $\mu$m or smaller in each of Examples 1, 3, 5, 7, 9, 11, 13 and 15 and Comparative Examples 2 and 3.

(Example 2)

From the separation membrane roll obtained finally in Example 1, a piece of the separation membrane was cut away and folded so as to have an effective area of 37.0 m$^2$. A net (thickness: 0.7 mm, pitch: 5 mm $\times$ 5 mm, fiber diameter: 350 $\mu$m, projected area ratio: 0.30) was used as a feed-side channel member, and a 930 mm-wide membrane folded into 26 leaves was made so as to have the feed-side channel member in a state of being sandwiched between leaves facing each other.
These membrane leaves were wound spirally on a water collection ABS tube (width: 1,020 mm, diameter: 30 mm, the number of pores: 40$\times$one straight line), and further a sheet of film was wound around them. The rim of the film was further fixed with a tape, and edge cutting, end plate attachment and filament winding were carried out, whereby an 8-inch separation membrane element was made.
This separation membrane element was housed in a pressure container, and made to operate under the foregoing conditions, thereby obtaining permeate. The amount of fresh water produced, desalination rate, pressure resistance and heat resistance found therein were as shown in Table 1.

(Example 3)

A resin was applied in a configuration of straight lines to the permeate-side face of the separation membrane obtained in the same manner as in Example 1 so that each of the straight lines was vertical to the length direction of the water collection tube in a separation membrane element, and so as to continue on membrane leaf from the inner-side end to the outer-side end in the winding direction.

More specifically, a saponified ethylene-vinyl acetate copolymer resin (trade name: Melthene 6822X, produced by Tosoh Corporation) was applied in a configuration of straight lines to the separation membrane at a resin temperature of 160°C at a transport speed of 2.5 m/min by means of an applicator loaded with a comb-shaped shim having a slit width of 0.7 mm and a pitch of 1.4 mm as a backup roll temperature was controlled to 20°C.

After solidification of the resin, pressurized heat treatment was carried out at a clearance of 0.26 mm under conditions that the pressure was 3 MPa and the temperature was 50°C, whereby pressurized permeate-side channel members were formed.

Dimensions of each of the thus formed channel members were as shown in Table 1.

Through the use of the thus produced separation membrane, permeate was obtained under the foregoing conditions The amount of fresh water produced, desalination rate, pressure resistance and heat resistance found therein were as shown in Table 1.

(Example 4)

By using the separation membrane roll obtained in Example 3, a separation membrane element was produced in the same manner as in Example 2. This element was housed in a pressure container, and made to operate under the foregoing conditions, thereby obtaining permeate. The amount of fresh water produced, desalination rate, pressure resistance and heat resistance found therein were as shown in Table 1.

(Example 5)

A separation membrane roll was produced in all the same process steps as in Example 3, except that the resin used for channel members was changed to a modified polyolefin hot melt (trade name: PHC-9275, produced by Prime Polymer Co., Ltd.), the resin temperature was changed to 120°C, the transport speed in applying linear coatings was changed to 3.5 m/min and the pressurized heat treatment after solidifying the resin was carried out at a pressure of 2 MPa, a temperature of 50°C and a clearance of 0.26 mm.

Through the use of the thus produced separation membrane, permeate was obtained under the foregoing conditions. The amount of fresh water produced, desalination rate, pressure resistance and heat resistance found therein were as shown in Table 1.

(Example 6)

By using the same separation membrane roll as obtained in Example 5, a separation membrane element was produced in the same manner as in Example 2.

The thus produced separation membrane element was housed in a pressure container, and made to operate under the foregoing conditions, thereby obtaining permeate. The amount of fresh water produced, desalination rate, pressure resistance and heat resistance found therein were as shown in Table 1.

(Example 7)

A separation membrane roll was produced in all the same process steps as in Example 3, except that the resin used for channel members was changed to a polyolefin adhesive (trade name: S10CL, produced by Prime Polymer Co., Ltd.), the resin temperature was changed to 200°C, the transport speed in applying linear coatings was changed to 2.0 m/min and the pressurized heat treatment after solidifying the resin was carried out at a pressure of 5 MPa, a temperature of 70°C and a clearance of 0.26 mm.

Through the use of the thus produced separation membrane, permeate was obtained under the foregoing conditions The amount of fresh water produced, desalination rate, pressure resistance and heat resistance found therein were as shown in Table 1.

(Example 8)

By using the same separation membrane roll as obtained in Example 7, a separation membrane element was produced in the same manner as in Example 2.

The thus produced separation membrane element was housed in a pressure container, and made to operate under the foregoing conditions, thereby obtaining permeate. As shown in Table 2, the amount of fresh water produced and the desalination rate were found to be 34.7 m³/day and 98.3%, respectively, and the pressure resistance was found to be 97.6%.

(Example 9)

A separation membrane roll was produced in all the same process steps as in Example 3, except that the comb-shaped shim was changed to a comb-shaped shim having a slit width of 0.7 mm and a pitch of 1.2 mm and channel members each having the dimensions shown in Table 2 were adhered to the overall separation membrane after the pressurized heat treatment.
Through the use of this separation membrane, permeate was obtained under the foregoing conditions. The amount of fresh water produced, desalination rate, pressure resistance and heat resistance found therein were as shown in Table 2.

(Example 10)

By using the same separation membrane roll as obtained in Example 9, a separation membrane element was produced in the same manner as in Example 2.
This separation membrane element was housed in a pressure container, and made to operate under the foregoing conditions, thereby obtaining permeate. The amount of fresh water produced, desalination rate, pressure resistance and heat resistance found therein were as shown in Table 2.

(Example 11)

A separation membrane roll was produced in all the same process steps as in Example 3, except that the comb-shaped shim was changed to a comb-shaped shim having a slit width of 0.7 mm and a pitch of 1.8 mm and channel members each having the dimensions shown in Table 2 were adhered to the overall separation membrane after the pressurized heat treatment.
Through the use of this separation membrane, permeate was obtained under the foregoing conditions. The amount of fresh water produced, desalination rate, pressure resistance and heat resistance found therein were as shown in Table 2.

(Example 12)

By using the same separation membrane roll as obtained in Example 11, a separation membrane element was produced in the same manner as in Example 2.
This separation membrane element was housed in a pressure container, and made to operate under the foregoing conditions, thereby obtaining permeate. The amount of fresh water produced, desalination rate, pressure resistance and heat resistance found therein were as shown in Table 2.

(Example 13)

A separation membrane roll was produced in all the same process steps as in Example 3, except that the comb-shaped shim was changed to a comb-shaped shim having a slit width of 0.7 mm and a pitch of 2.2 mm and the channel members each having the dimensions shown in Table 2 were adhered to the overall separation membrane after the pressurized heat treatment.
Through the use of this separation membrane, permeate was obtained under the foregoing conditions. The amount of fresh water produced, desalination rate, pressure resistance and heat resistance found therein were as shown in Table 2.

(Example 14)

By using the same separation membrane roll as obtained in Example 13, a separation membrane element was produced in the same manner as in Example 2.
This separation membrane element was housed in a pressure container, and made to operate under the foregoing conditions, thereby obtaining permeate. The amount of fresh water produced, desalination rate, pressure resistance and heat resistance found therein were as shown in Table 2.

(Example 15)

A separation membrane roll was produced in all the same process steps as in Example 3, except that the substrate was changed to a polyester long-fiber nonwoven fabric (fiber diameter: 1 decitex, thickness: about 90 $\mu$m, air

permeability: 1.0 cc/cm$^2$/sec, degree of fiber orientation at the surface on the side of the porous supporting layer: 40°, degree of fiber orientation at the surface on the side opposite to the porous supporting layer: 20°).

Through the use of this separation membrane roll, permeate was obtained under the foregoing conditions. Therein, a reduction of membrane flaws was observed, and the amount of fresh water produced, desalination rate, pressure resistance and heat resistance found therein were as shown in Table 2.

(Example 16)

A separation membrane roll was produced in all the same process steps as in Example 3, except that the comb-shaped shim was changed to a comb-shaped shim having a slit width of 0.4 mm and a pitch of 1.0 mm and channel members each having the dimensions shown in Table 3 were adhered to the permeate-side face of the separation membrane after the pressurized heat treatment.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 17)

A separation membrane roll was produced in all the same process steps as in Example 3, except that the comb-shaped shim was changed to a comb-shaped shim having a slit width of 0.3 mm and a pitch of 0.8 mm and channel members each having the dimensions shown in Table 3 were adhered to the permeate-side face of the separation membrane after the pressurized heat treatment.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 18)

A separation membrane roll was produced in all the same process steps as in Example 3, except that the comb-shaped shim was changed to a comb-shaped shim having a slit width of 1.3 mm and a pitch of 1.8 mm and channel members each having the dimensions shown in Table 3 were adhered to the permeate-side face of the separation membrane after the pressurized heat treatment.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 19)

A separation membrane roll was produced in all the same process steps as in Example 3, except that the comb-shaped shim was changed to a comb-shaped shim having a slit width of 0.4 mm and a pitch of 1.1 mm and channel members each having the dimensions shown in Table 3 were adhered to the permeate-side face of the separation membrane after the pressurized heat treatment.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 20)

A separation membrane roll was produced in all the same steps as in Example 17, except that the channel members adhered to the permeate-side face of the separation membrane after the pressurized heat treatment were channel members each having the dimensions shown in Table 3.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 21)

A separation membrane roll was produced in all the same process steps as in Example 17, except that the control of backup-roll temperature was not carried out.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Example 22)

A separation membrane roll was produced in all the same process steps as in Example 7, except that the comb-shaped shim was changed to a comb-shaped shim having a slit width of 0.4 mm and a pitch of 1.0 mm, the control of backup-roll temperature was not carried out and the channel members adhered to the permeate-side face of the separation membrane after the pressurized heat treatment were channel members each having the dimensions shown in Table 3.

By using the thus obtained separation membrane roll, a separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 3.

(Comparative Example 1)

A separation membrane roll was produced in all the same process steps as in Example 1, except that tricot (thickness: 300 $\mu$m, groove width: 200$\mu$m, rib width: 300$\mu$m, groove depth: 105 $\mu$m) was placed on the permeate-side face instead of the discontinuous channel members.

By using the thus obtained separation membrane roll, an 8-inch separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 4.

(Comparative Example 2)

A separation membrane roll was produced in all the same process steps as in Example 1, except that the pressurized heat treatment was not carried out.

By using the thus obtained separation membrane roll, an 8-inch separation membrane element was produced in the same manner as in Example 2.

This separation membrane element was housed in a pressure container, and made to operate under the foregoing conditions, thereby obtaining permeate. The amount of fresh water produced, desalination rate, pressure resistance and heat resistance found therein were as shown in Table 4.

(Comparative Example 3)

A resin was applied in a configuration of straight lines to the permeate-side face of the separation membrane obtained in the same manner as in Example 1 so that each of the straight lines was vertical to the length direction of the water collection tube in a separation membrane element, and so as to continue on membrane leaf from the inner-side end to the outer-side end in the winding direction.

More specifically, a separation membrane roll was produced in all the same process steps as in Example 1,

EP 2 868 365 A1

except that channel members having the dimensions shown in Table 4 were adhered to the permeate-side face of the separation membrane by means of an applicator loaded with a comb-shaped shim having a slit width of 0.9 mm and a pitch of 1.4 mm.

The number of leaves formed with the thus produced separation membrane roll was 26, and an 8-inch separation membrane element was made in the same manner as in Example 2, except that these 26 leaves were used.

This separation membrane element was housed in a pressure container, and made to operate under the foregoing conditions. The amount of fresh water produced and desalination rate found therein were as shown in Table 4.

(Comparative Example 4)

A separation membrane roll was produced in the same manner as in Example 17, except that the resin was changed to polystyrene (trade name: CR-2500, produced by DIC Corporation), the resin temperature was changed to 300°C, the working speed was changed to 2.5 m/min, the control of backup-roll temperature was not carried out and channel members having the dimensions shown in Table 4 were adhered to the permeate-side face of the separation membrane after the pressurized heat treatment.

By using the thus obtained separation membrane roll, a separation membrane element was produced in the same manner as in Example 2.

This separation membrane element was housed in a pressure container, and made to operate under the foregoing conditions. Therein, the separation membrane caused thermal degradation because the temperature of the fused resin was high. The amount of fresh water produced, desalination rate, pressure resistance and thermal resistance found therein were as shown in Table 4.

(Comparative Example 5)

A separation membrane roll was produced in all the same process steps as in Example 17, except that without receiving the pressurized heat treatment, channel members having the dimensions shown in Table 4 were adhered to the permeate-side face of the separation membrane.

By using the thus obtained separation membrane roll, a separation membrane element was produced in the same manner as in Example 2.

This element was housed in a pressure container, and made to operate under the foregoing conditions. The amount of fresh water produce, desalination rate, pressure resistance and heat resistance found therein were as shown in Table 4.

Table 1

| | | Example 1 | Example 2 | Example 3 | Example 4 | Example 5 | Example 6 | Example 7 |
|---|---|---|---|---|---|---|---|---|
| Pressurized Heat Treatment | Pressure (MPa) | 3 | 3 | 3 | 3 | 2 | 2 | 5 |
| | Temperature (°C) | 50 | 50 | 50 | 50 | 50 | 50 | 70 |
| | Clearance (mm) | 0.26 | 0.26 | 0.26 | 0.26 | 0.26 | 0.26 | 0.26 |
| Permeate-Side Channel Members | Configuration | dots | dots | straight lines | straight lines | straight lines | straight lines | straight lines |
| | Material | saponified ethylene-vinyl acetate copolymer | saponified ethylene-vinyl acetate copolymer | saponified ethylene-vinyl acetate copolymer | saponified ethylene-vinyl acetate copolymer | modified polyolefin hot melt | modified polyolefin hot melt | polyolefin adhesive |
| | Melting Temperature (°C) | 115 | 115 | 115 | 115 | 104 | 104 | 170 |
| | Angle (°) with Respect to Length Direction of Water Collection tube | - | - | 90 | 90 | 90 | 90 | 90 |
| | Cross-Sectional shape | trapezoid | trapezoid | trapezoid | trapezoid | trapezoid | trapezoid | trapezoid |
| | Height (mm) | 0.26 | 0.26 | 0.26 | 0.26 | 0.26 | 0.26 | 0.26 |
| | Top Width (mm) | 0.85 | 0.85 | 0.85 | 0.85 | 0.85 | 0.85 | 0.85 |
| | Bottom Width (mm) | 0.95 | 0.95 | 0.95 | 0.95 | 0.95 | 0.95 | 0.95 |
| | Spacing between Adjacent Channel Members in First Direction (mm) | 0.50 | 0.50 | 0.50 | 0.50 | 0.50 | 0.50 | 0.50 |
| | Spacing between Adjacent Channel Members in Second Direction (mm) | 0.5 | 0.5 | 0 | 0 | 0 | 0 | 0 |
| | Pitch (mm) | 1.4 | 1.4 | 1.4 | 1.4 | 1.4 | 1.4 | 1.4 |
| | Projected Area Ratio | 0.32 | 0.32 | 0.63 | 0.63 | 0.63 | 0.63 | 0.63 |

(continued)

| | | Example 1 | Example 2 | Example 3 | Example 4 | Example 5 | Example 6 | Example 7 |
|---|---|---|---|---|---|---|---|---|
| | Ratio of Height to Width of Channel Member in First Direction | 0.29 | 0.29 | 0.29 | 0.29 | 0.29 | 0.29 | 0.29 |
| | Ratio of Spacing between Adjacent Channel Members to Width of Channel member in First Direction | 0.56 | 0.56 | 0.56 | 0.56 | 0.56 | 0.56 | 0.56 |
| | Channel member Density (g/cm$^3$) | 1.2 | 1.2 | 1.2 | 1.2 | 1.5 | 1.5 | 1.1 |
| Separation Membrane Performance | Amount of Fresh Water Produced (m$^3$/m$^2$/day) | 1.04 | - | 1.03 | - | 1.03 | - | 1.04 |
| | Desalination Rate (%) | 98.2 | - | 98.3 | - | 98.2 | - | 98.2 |
| | Pressure Resistance (%) | 97.1 | - | 97.4 | - | 92.0 | - | 97.6 |
| Element Performance | Amount of Fresh Water Produced (m$^3$/day) | - | 36.7 | - | 34.5 | - | 34.0 | - |
| | Desalination Rate (%) | - | 98.2 | - | 98.4 | - | 98.1 | - |
| | Pressure Resistance (%) | - | 97.1 | - | 97.4 | - | 92.0 | - |
| | Heat Resistance (%) | - | 99% or higher | - | 99% or higher | - | 99% or higher | - |

Table 2

| | | Example 8 | Example 9 | Example 10 | Example 11 | Example 12 | Example 13 | Example 14 | Example 15 |
|---|---|---|---|---|---|---|---|---|---|
| Pressurized Heat Treatment | Pressure (MPa) | 5 | 3 | 3 | 3 | 3 | 3 | 3 | 3 |
| | Temperature (°C) | 70 | 50 | 50 | 50 | 50 | 50 | 50 | 50 |
| | Clearance (mm) | 0.26 | 0.26 | 0.26 | 0.26 | 0.26 | 0.26 | 0.26 | 0.26 |
| Permeate-Side Channel Members | Configuration | straight lines | straight lines | straight lines | straight lines | straight lines | straight lines | straight lines | straight lines |
| | Material | polyolefin additive | saponified ethylene-vinyl acetate copolymer | saponified ethylene-vinyl acetate copolymer | saponified ethylene-vinyl acetate copolymer | saponified ethylene-vinyl acetate copolymer | saponified ethylene-vinyl acetate copolymer | saponified ethylene-vinyl acetate copolymer | saponified ethylene-vinyl acetate copolymer |
| | Melting Temperature (°C) | 170 | 115 | 115 | 115 | 115 | 115 | 115 | 115 |
| | Angle (°) with Respect to Length Direction of Water Collection tube | 90 | 90 | 90 | 90 | 90 | 90 | 90 | 90 |
| | Cross-Sectional shape | trapezoid | trapezoid | trapezoid | trapezoid | trapezoid | trapezoid | trapezoid | trapezoid |
| | Height (mm) | 0.26 | 0.26 | 0.26 | 0.26 | 0.26 | 0.26 | 0.26 | 0.26 |
| | Top Width (mm) | 0.85 | 0.65 | 0.65 | 1.25 | 1.25 | 1.65 | 1.65 | 0.85 |
| | Bottom Width (mm) | 0.95 | 0.75 | 0.75 | 1.35 | 1.35 | 1.75 | 1.75 | 0.95 |
| | Spacing between Adjacent Channel Members in First Direction (mm) | 0.50 | 0.50 | 0.50 | 0.50 | 0.50 | 0.50 | 0.50 | 0.50 |
| | Spacing between Adjacent Channel Members in Second Direction (mm) | 0 | 0 | 0 | 0 | 0 | 0 | 0 | 0 |

| | | Example 8 | Example 9 | Example 10 | Example 11 | Example 12 | Example 13 | Example 14 | Example 15 |
|---|---|---|---|---|---|---|---|---|---|
| | Pitch (mm) | 1.4 | 1.2 | 1.2 | 1.8 | 1.8 | 2.2 | 2.2 | 1.4 |
| | Projected Area Ratio | 0.63 | 0.58 | 0.58 | 0.72 | 0.72 | 0.77 | 0.77 | 0.63 |
| | Ratio of Height to Width of Channel Member in First Direction | 0.29 | 0.37 | 0.37 | 0.20 | 0.20 | 0.15 | 0.15 | 0.29 |
| | Ratio of Spacing between Adjacent Channel Members to Width of Channel Member in First Direction | 0.56 | 0.71 | 0.71 | 0.38 | 0.38 | 0.29 | 0.29 | 0.56 |
| | Channel Member Density (g/cm$^3$) | 1.1 | 1.2 | 1.2 | 1.2 | 1.2 | 1.2 | 1.2 | 1.2 |
| Separation Membrane Performance | Amount of Fresh Water Produced (m$^3$/m$^2$/day) | - | 1.04 | - | 1.04 | - | 1.04 | - | 1.03 |
| | Desalination Rate (%) | - | 98.2 | - | 98.2 | - | 98.2 | - | 98.5 |
| | Pressure Resistance (%) | - | 97.0 | | 97.8 | - | 98.0 | - | 97.5 |
| Element Performance | Amount of Fresh Water Produced (m$^3$/ day) | 34.7 | - | 35.6 | | 32.2 | | 31.3 | |
| | Desalination Rate (%) | 98.3 | - | 98.4 | | 98.4 | | 98.4 | |
| | Pressure Resistance (%) | 97.6 | - | 97.0 | | 97.8 | | 98.0 | |
| | Heat Resistance (%) | 99% or higher | - | 99% or higher | | 99% or higher | | 99% or higher | |

EP 2 868 365 A1

Table 3

| | | Example 16 | Example 17 | Example 18 | Example 19 | Example 20 | Example 21 | Example 22 |
|---|---|---|---|---|---|---|---|---|
| Pressurized Heat Treatment | Pressure (MPa) | 3 | 3 | 3 | 3 | 3 | 3 | 3 |
| | Temperature (°C) | 50 | 50 | 50 | 50 | 50 | 50 | 50 |
| | Clearance (mm) | 0.26 | 0.26 | 0.26 | 0.26 | 0.26 | 0.26 | 0.26 |
| Permeate-Side Channel Members | Configuration | straight lines | straight lines | straight lines | straight lines | straight lines | straight lines | straight lines |
| | Material | saponified ethylene-vinyl acetate copolymer | saponified ethylene-vinyl acetate copolymer | saponified ethylene-vinyl acetate copolymer | saponified ethylene-vinyl acetate copolymer | saponified ethylene-vinyl acetate copolymer | saponified ethylene-vinyl acetate copolymer | polyolefin adhesive |
| | Melting Temperature (°C) | 115 | 115 | 115 | 115 | 115 | 115 | 170 |
| | Angle (°) with Respect to Length Direction of Water Collection tube | 90 | 90 | 90 | 90 | 90 | 90 | 90 |
| | Cross-Sectional shape | trapezoid | trapezoid | trapezoid | trapezoid | trapezoid | trapezoid | trapezoid |
| | Height (mm) | 0.26 | 0.26 | 0.26 | 0.26 | 0.24 | 0.20 | 0.26 |
| | Top Width (mm) | 0.45 | 0.25 | 1.25 | 0.45 | 0.45 | 0.45 | 0.45 |
| | Bottom Width (mm) | 0.55 | 0.35 | 1.35 | 0.55 | 0.55 | 0.55 | 0.55 |
| | Spacing between Adjacent Channel Members in First Direction (mm) | 0.50 | 0.50 | 0.50 | 0.60 | 0.50 | 0.50 | 0.50 |
| | Spacing between Adjacent Channel Members in Second Direction (mm) | 0 | 0 | 0 | 0 | 0 | 0 | 0 |
| | Pitch (mm) | 1.0 | 0.8 | 1.8 | 1.1 | 1.0 | 1.0 | 1.0 |
| | Projected Area Ratio | 0.50 | 0.38 | 0.72 | 0.45 | 0.50 | 0.50 | 0.50 |

(continued)

| | | Example 16 | Example 17 | Example 18 | Example 19 | Example 20 | Example 21 | Example 22 |
|---|---|---|---|---|---|---|---|---|
| | Ratio of Height to Width of Channel Member in First Direction | 0.52 | 0.87 | 0.20 | 0.52 | 0.48 | 0.40 | 0.52 |
| | Ratio of Spacing between Adjacent Channel Members to Width of Channel Member in First Direction | 1.00 | 1.67 | 0.38 | 1.20 | 1.00 | 1.00 | 1.00 |
| | Channel Member Density $(g/cm^3)$ | 1.2 | 1.2 | 1.2 | 1.2 | 1.8 | 2.5 | 1.1 |
| Element Performance | Amount of Fresh Water Produced $(m^3/$ day) | 34.7 | 34.80 | 34.1 | 35.00 | 34.20 | 33.9 | 34.9 |
| | Desalination Rate (%) | 98.3 | 98.3 | 98.5 | 98.3 | 98.4 | 98.6 | 98.2 |
| | Pressure Resistance (%) | 97.0 | 95.9 | 98.0 | 96.3 | 97.5 | 98.0 | 99.3 |
| | Heat Resistance (%) | 99% or higher | 99% or higher | 99% or higher | 99% or higher | 99% or higher | 99% or higher | 99% or higher |

Table 4

| | | Comparative Example 1 | Comparative Example 2 | Comparative Example 3 | Comparative Example 4 | Comparative Example 5 |
|---|---|---|---|---|---|---|
| Pressurized Heat Treatment | Pressure (MPa) | - | - | - | 3 | - |
| | Temperature (°C) | - | - | - | 50 | - |
| | Clearance (mm) | - | - | - | 0.26 | - |
| | Configuration | - | dots | straight lines | straight lines | straight lines |
| | Material | - | ethylene-vinyl acetate copolymer | ethylene-vinyl acetate copolymer | polystyrene | saponified ethylene-vinyl acetate copolymer |
| | Melting Temperature (°C) | 240 | 115 | 115 | 240 | 115 |
| | Angle (°) with Respect to Length Direction of Water Collection tube | - | 90 | 90 | 90 | 90 |
| | Cross-Sectional shape | - | trapezoid | trapezoid | trapezoid | trapezoid |
| | Height (mm) | - | 0.26 | 0.26 | 0.26 | 0.26 |
| | Top Width (mm) | - | 0.80 | 0.80 | 0.25 | 0.25 |
| | Bottom Width (mm) | - | 1.00 | 1.00 | 0.35 | 0.35 |
| Permeate-Side Channel Members | Spacing between Adjacent Channel Members in First Direction (mm) | - | 0.50 | 0.50 | 0.50 | 0.50 |
| | Spacing between Adjacent Channel Members in Second Direction (mm) | - | 0 | 0 | 0 | 0 |
| | Pitch (mm) | - | 1.4 | 1.4 | 0.8 | 0.8 |
| | Projected Area Ratio | - | 0.32 | 0.63 | 0.38 | 0.38 |
| | Ratio of Height to Width of Channel Member in First Direction | - | 0.29 | 0.29 | 0.87 | 0.87 |
| | Ratio of Spacing between Adjacent Channel Members to Width of Channel Member in First Direction | - | 0.56 | 0.56 | 1.67 | 1.67 |
| | Channel Member Density (g/cm³) | - | 0.9 | 0.9 | 1.1 | 1.2 |

(continued)

| Element Performance | | Comparative Example 1 | Comparative Example 2 | Comparative Example 3 | Comparative Example 4 | Comparative Example 5 |
|---|---|---|---|---|---|---|
| | Amount of Fresh Water Produced (m$^3$/ day) | 31.0 | 25.6 | 25.1 | 24.1 | 25.0 |
| | Desalination Rate (%) | 98.4 | 98.5 | 98.3 | 98.7 | 98.6 |
| | Pressure Resistance (%) | 97.9 | 75.0 | 75.2 | 99.5 | 73.0 |
| | Heat Resistance (%) | - | 99% or higher | 99% or higher | 68.0 | 99% or higher |

As is evident from the results shown in Tables 1 to 4, the separation membranes and separation membrane elements according to the invention have high fresh-water production performance, stable operation performance and excellent removal performance.

In the foregoing paragraphs of this description, the invention has been illustrated in detail by reference to the specified embodiments. It will, however, be apparent to one skilled in the art that various changes and modifications can be made therein without departing from the spirit and scope of the invention. The present application is based on Japanese Patent Application No. 2012-145157 filed on June 28, 2012, the contents of which are incorporated herein by reference.

INDUSTRIAL APPLICABILITY

The membrane element according to the present invention can be used suitably for desalination of brackish water and seawater in particular.

DESCRIPTION OF REFERENCE NUMERALS AND SIGNS

| | |
|---|---|
| 1 | Separation membrane |
| 2 | Separation membrane main body |
| 21 | Feed-side face |
| 22 | Permeate-side face |
| 201 | Substrate |
| 202 | Porous supporting layer |
| 203 | Separation functional layer |
| 3 | Permeate-side channel member |
| 31 | Impregnated portion |
| 4 | Separation membrane pair |
| 5 | Permeate-side flow path |
| 6 | Feed-side channel member |
| 7 | Other separation membrane |
| 71 | Feed-side face |
| 72 | Permeate-side face |
| 8 | Water collection tube |
| 100 | Separation membrane element |
| a | Length of separation membrane main body |
| b | Spacing between adjacent channel members in width direction of separation membrane main body |
| c | Channel member thickness (height) |
| d | Channel member width |
| e | Spacing between adjacent channel members in length direction of separation membrane main body |
| f | Channel member length |
| W1 | Bottom width |
| W2 | Top width |
| T1 | Substrate thickness |
| T2 | Thickness of channel member-impregnated portion |

**Claims**

1. A separation membrane comprising: a separation membrane main body having a feed-side face and a permeate-side face; and a plurality of channel members adhered to the permeate-side face of the separation membrane main body,
   wherein a weight W (g) of the plurality of channel members and a volume V ($cm^3$) of the plurality of channel members, exclusive of portions impregnated into the permeate-side face, satisfy the following relational expression:

$$1.0 \leq W/V \leq 2.5,$$

and the channel members have a melting temperature of 200°C or lower as measured with a differential scanning calorimeter.

2. The separation membrane according to claim 1, wherein a ratio of a thickness of the channel member to a width of the channel member in a first direction parallel to the permeate-side face is from 0.2 to 1.

3. The separation membrane according to claim 1 or 2, wherein the channel members are separately provided from one another so that the width of each channel member becomes wider than a spacing between the channel members adjacent to each other in the first direction parallel to the permeate-side face.

4. The separation membrane according to claim 2 or 3, wherein a ratio of the spacing between the adjacent channel members to the width of each channel member in the first direction is from 0.3 to 1.3.

5. The separation membrane according to any one of claims 1 to 4, wherein a maximum value of differences in thicknesses of all the channel members provided on the separation membrane is 0.25 mm or smaller.

6. The separation membrane according to any one of claims 1 to 5, wherein the separation membrane main body comprises a substrate, a porous supporting layer provided on the substrate and a separation functional layer provided on the porous supporting layer, and the substrate is a long-fiber nonwoven fabric.

7. A separation membrane element comprising the separation membrane according to any one of claims 1 to 6.

*Fig. 1*

*Fig. 2*

(Second direction: Length direction)

(First direction: Width direction)

*Fig. 3*

*Fig. 4*

First direction
(Length direction of
water collection tube)

100

1

2

8

Inner side

Outer side

Second direction
(Winding direction)

*Fig. 5*

**INTERNATIONAL SEARCH REPORT**

| | International application No. |
| --- | --- |
| | PCT/JP2013/067828 |

| A. CLASSIFICATION OF SUBJECT MATTER |
| --- |
| *B01D63/00*(2006.01)i, *B01D69/10*(2006.01)i, *B01D69/12*(2006.01)i |

According to International Patent Classification (IPC) or to both national classification and IPC

| B. FIELDS SEARCHED |
| --- |
| Minimum documentation searched (classification system followed by classification symbols) |
| B01D63/00, B01D69/10, B01D69/12 |

| Documentation searched other than minimum documentation to the extent that such documents are included in the fields searched |
| --- |
| Jitsuyo Shinan Koho           1922-1996   Jitsuyo Shinan Toroku Koho    1996-2013 |
| Kokai Jitsuyo Shinan Koho     1971-2013   Toroku Jitsuyo Shinan Koho    1994-2013 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 63-296804 A  (Terumo Corp.),<br>02 December 1988 (02.12.1988),<br>page 8, lower left column, line 1 to page 9,<br>upper right column, line 3; page 10, upper<br>right column, line 3 to lower left column, line<br>8; fig. 1<br>& US 5094749 A          & EP 392010 A1<br>& WO 1988/009200 A1     & DE 3886053 T<br>& DE 3886053 D          & AU 1798088 A | 1-7 |
| A | JP 2012-40487 A  (Toray Industries, Inc.),<br>01 March 2012 (01.03.2012),<br>paragraphs [0106] to [0109], [0121] to [0127]<br>(Family: none) | 1-7 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 July, 2013 (17.07.13) | Date of mailing of the international search report<br>30 July, 2013 (30.07.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/067828 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 58-104604 A  (Hoechst AG.),<br>22 June 1983 (22.06.1983),<br>page 1, lower left column, line 1 to page 2,<br>lower left column, line 15; fig. 1, 2<br>& EP 81182 A2         & DE 3148312 A<br>& DE 3272379 D         & NO 823916 A<br>& NZ 202711 A          & AU 9094782 A<br>& ES 517965 A          & FI 824184 A<br>& CA 1214114 A         & DK 539382 A<br>& AU 555429 B          & FI 824184 A0 | 1-7 |
| A | JP 58-163405 A  (Daicel Chemical Industries,<br>Ltd.),<br>28 September 1983 (28.09.1983),<br>page 1, lower left column, line 1 to page 2,<br>upper left column, line 7; fig. 1, 2<br>(Family: none) | 1-7 |
| A | WO 2011/152484 A1  (Toray Industries, Inc.),<br>08 December 2011 (08.12.2011),<br>page 44<br>& EP 2578303 A          & SG 185557 A<br>& AU 2011259905 A       & CN 102917776 A | 1-7 |
| P,A | WO 2013/047744 A1  (Toray Industries, Inc.),<br>04 April 2013 (04.04.2013),<br>pages 62 to 63<br>(Family: none) | 1-7 |
| P,A | WO 2013/047746 A1  (Toray Industries, Inc.),<br>04 April 2013 (04.04.2013),<br>pages 62 to 63<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006247453 A
- JP 2010099590 A
- JP 4414216 B
- JP 4011928 B
- JP 11226366 A
- JP 2012145157 A